# EUROPEAN PATENT APPLICATION

(11) **EP 4 844 939 A1**
(43) Date of publication of application: **25.11.2026**
(21) Application number: 24917786.6
(22) Date of filing: 19.01.2024
(51) Int. Cl.: H01M 50/586, H01M 50/593, H01M 10/42

(54) **ELECTRODE ASSEMBLY, BATTERY CELL, BATTERY AND ELECTRICAL DEVICE**

(71) Applicant: Contemporary Amperex Technology Co., Limited, Ningde, Fujian 352100 (CN)
(72) Inventor: WANG, Yaohui, Ningde, Fujian 352100 (CN); DENG, Bokai, Ningde, Fujian 352100 (CN); YANG, Jian, Ningde, Fujian 352100 (CN); XIA, Zhonghui, Ningde, Fujian 352100 (CN); AI, Shaohua, Ningde, Fujian 352100 (CN); SUN, Chengdong, Ningde, Fujian 352100 (CN); HUANG, Siying, Ningde, Fujian 352100 (CN)
(74) Representative: Gong, Jinping
(86) International application number: PCT/CN2024/073307
(87) International publication number: WO 2025/152163

(57) **Abstract**

Provided in the present application are an electrode assembly, a battery cell, a battery, and an electric device. The electrode assembly includes a first electrode plate and a second electrode plate having opposite polarities; the first electrode plate includes a first electrode plate main body; the first electrode plate main body includes a first current collector main body and a first active substance layer; the first current collector main body includes two first surfaces arranged opposite each other in a thickness direction thereof and a first end surface connecting the two first surfaces; and the first active substance layer is arranged on the first surface. The electrode assembly further includes an insulating member connected to the first electrode plate main body; at least a portion of the insulating member is arranged on an outer side of the first end surface in a first direction; the first direction is perpendicular to the thickness direction. The insulating member can separate burrs on the first end surface from the second electrode plate, thereby reducing the risk of conduction between the burrs and the second electrode plate and reducing the possibility of thermal runaway caused by a short circuit, improving the reliability of the battery cell.

## Description

### TECHNICAL FIELD

The present application relates to the technical field of batteries, and in particular, to an electrode assembly, a battery cell, a battery, and an electric device.

### BACKGROUND

Battery cells are widely used in electronic devices, such as mobile phones, laptop computers, electric bicycles, electric vehicles, electric airplanes, electric ships, electric toy cars, electric toy ships, electric toy airplanes, and electric tools.

In the development of battery technologies, how to improve the reliability of battery cells is a research direction in the battery technologies.

### SUMMARY

The present application provides an electrode assembly, a battery cell, a battery, and an electric device, which can improve the reliability.

In a first aspect, embodiments of the present application provide an electrode assembly, including a first electrode plate and a second electrode plate that have opposite polarities. The first electrode plate includes a first electrode plate main body. The first electrode plate main body includes a first current collector main body and a first active substance layer. The first current collector main body includes two first surfaces arranged opposite to each other in a thickness direction thereof and a first end surface connecting the two first surfaces. The first active substance layer is arranged on the first surface. The electrode assembly further includes an insulating member connected to the first electrode plate main body. At least a portion of the insulating member is arranged on the outer side of the first end surface in a first direction. The first direction is perpendicular to the thickness direction.

The insulating member may separate burrs on the first end surface from the second electrode plate, thereby reducing the risk of conduction between the burrs and the second electrode plate and reducing the possibility of thermal runaway caused by a short circuit, improving the reliability of the battery cell.

In one or more of the foregoing optional embodiments, the insulating member includes two first insulating parts and a second insulating part. The two first insulating parts are respectively located on two sides of the first electrode plate main body in the thickness direction and connected to the first electrode plate main body. The second insulating part connects the two first insulating parts and is arranged on the outer side of the first end surface in the first direction.

The arrangement of two first insulating parts can increase a connection area between the insulating member and the first electrode plate main body and reduce a risk that the insulating member falls off. The second insulating part may separate the burrs on the first end surface from the second electrode plate, thereby reducing the risk of a short circuit.

In one or more of the foregoing optional embodiments, the second insulating part covers at least a portion of the first end surface to wrap the burrs on the first end surface, thereby further reducing the risk of a short circuit.

In one or more of the foregoing optional embodiments, the first electrode plate further includes a first tab connected to the first current collector main body, and the first end surface includes a tab lead-out region and a non-tab lead-out region. The first tab is only led out from the tab lead-out region, and protrudes from the second insulating part in the first direction toward a direction away from the first current collector main body. The first tab protrudes from the second insulating part, to facilitate connection to another conductive structure, thereby reducing a risk that the second insulating part interferes with the conductive structure.

In one or more of the foregoing optional embodiments, the second insulating part covers at least a portion of the non-tab lead-out region. The second insulating part may separate the burrs on the non-tab lead-out region from the second electrode plate, thereby reducing the risk of a short circuit.

In one or more of the foregoing optional embodiments, the second insulating part is arranged only on an outer side of the non-tab lead-out region in the first direction, thereby reducing the amount of the insulating member used.

In one or more of the foregoing optional embodiments, the second insulating part includes a first extending part and a second extending part. The first extending part is arranged on an outer side of the non-tab lead-out region in the first direction, and the second extending part is arranged on an outer side of the tab lead-out region in the first direction and covers at least a portion of the tab in the thickness direction.

The first extending part may separate the burrs on the non-tab lead-out region from the second electrode plate, thereby reducing the risk of a short circuit. The second extending part may support a root part of the first tab close to the tab lead-out region, so as to reduce a risk that the first tab is reversely inserted between the first electrode plate and the second electrode plate when being bent, thereby reducing the risk of a short circuit and improving the reliability.

In one or more of the foregoing optional embodiments, the first extending part covers the non-tab lead-out region in the first direction to shield the burrs on the non-tab lead-out region.

In one or more of the foregoing optional embodiments, a dimension of the first extending part in the first direction is equal to a dimension of the second extending part in the first direction. The second insulating part is provided with a uniform width, which facilitates molding.

In one or more of the foregoing optional embodiments, the first extending part is provided with a first portion and a second portion; the second portion is connected to the second extending part, a dimension of the second portion in the first direction is equal to a dimension of the second extending part in the first direction, the first portion is configured to be formed by providing a recess on the second insulating part, and a dimension of the first portion in the first direction is smaller than the dimension of the second extending part in the first direction. The arrangement of the recess can reduce the dimension of the first portion in the first direction, thereby reducing the amount of the insulating member used and increasing the energy density of the battery cell.

In one or more of the foregoing optional embodiments, in the first direction, a dimension of a root region of the first tab covered by the second extending part is greater than or equal to 0.2 times a dimension of the first tab. The second extending part may provide effective support for the first tab, thereby reducing a risk that the first tab is reversely inserted between the first electrode plate and the second electrode plate, and improving the reliability.

In one or more of the foregoing optional embodiments, in the first direction, a dimension of a root region of the first tab covered by the second extending part is less than or equal to 0.6 times the dimension of the first tab, thereby reducing the volume and weight of the insulating member and improving the energy density.

In one or more of the foregoing optional embodiments, the first insulating part is connected to the first active substance layer, such that a connection area between the insulating member and the first electrode plate main body can be increased, and a risk that the insulating member falls off can be reduced.

In one or more of the foregoing optional embodiments, at least a portion of a region of the first insulating part overlaps with the first active substance layer in the thickness direction and is connected to the first active substance layer, thereby further increasing a connection area between the first insulating part and the first electrode plate main body.

In one or more of the foregoing optional embodiments, the first active substance layer includes a main body region arranged in the first direction and a thinned region connected to the main body region. The thinned region is located on a side of the main body region close to the first end surface in the first direction, and a thickness of at least a portion of the thinned region is less than a thickness of the main body region. The first insulating part covers at least a portion of the thinned region in the thickness direction.

The arrangement of the thinned region can reduce the pressure exerted on an edge part of the first active substance layer during rolling of the first electrode plate, and reduce a risk of cracking of the first current collector main body. The first insulating part is disposed in a space on one side of the thinned region along the thickness direction, thereby improving the space utilization rate.

In one or more of the foregoing optional embodiments, in a direction in which the first current collector main body points to the first active substance layer, the first insulating part does not exceed a surface of the main body region facing away from the first current collector main body, thereby reducing the additional space occupied by the first insulating part in the thickness direction, improving the space utilization rate, and reducing a risk that the first insulating part squeezes the second electrode plate.

In one or more of the foregoing optional embodiments, the first insulating part is spaced apart from the main body region in the first direction, such that the main body region does not overlap with the first insulating part in the thickness direction, thereby improving the space utilization rate.

In one or more of the foregoing optional embodiments, the first insulating part covers a portion of the main body region. The first insulating part is connected to both the main body region and the thinned region, thereby increasing a connection area between the insulating member and the first electrode plate main body, and reducing a risk that the insulating member falls off.

In one or more of the foregoing optional embodiments, a thickness t1 of an end part of the thinned region away from the main body region is less than or equal to 0.5 times a thickness t2 of the main body region. An end part of the thinned region away from the main body region has a relatively small thickness. In this way, a region wrapped by the second insulating part can be reduced, and stress on a joint between the first insulating part and the second insulating part can be reduced, thereby reducing a risk that the insulating member is cracked or falls off.

In one or more of the foregoing optional embodiments, the first surface includes a coated region and an uncoated region arranged in the first direction; one end of the uncoated region is connected to the first end surface, the other end of the uncoated region is connected to the coated region, the coated region is coated with the first active substance layer, and the uncoated region is not coated with the first active substance layer. The first insulating part is connected to the uncoated region.

The arrangement of the uncoated region can increase a connection area between the first current collector main body and the insulating member, and reduce a risk that the insulating member falls off, thereby improving the reliability. The first end surface and the first active substance layer are spaced apart from each other in the first direction. In this way, a risk of cutting into the first active substance layer can be reduced during the cutting process of the first electrode plate, thereby reducing a waste of active substances.

In one or more of the foregoing optional embodiments, the first insulating part completely covers the uncoated region, thereby reducing the possibility of conduction between the uncoated region and the second electrode plate, reducing the risk of a short circuit, and improving the reliability.

In one or more of the foregoing optional embodiments, in the first direction, a dimension of a region of the insulating member covering the uncoated region is greater than or equal to 1 mm, thereby increasing the connection strength between the insulating member and the uncoated region and reducing a risk that the insulating member falls off from the first electrode plate.

In one or more of the foregoing optional embodiments, the first electrode plate further includes a first tab. The first tab extends outward from the first end surface in the first direction and passes through the second insulating part.

In one or more of the foregoing optional embodiments, the insulating member includes two insulating layers formed separately, and each insulating layer includes an insulating main body and a connecting part connected to the insulating main body; in the thickness direction, the insulating main body overlaps with the first electrode plate main body, and the connecting part does not overlap with the first electrode plate main body. The insulating main bodies of the two insulating layers respectively form the two first insulating parts; the connecting parts of the two insulating layers are connected in a stacked manner to form the second insulating part.

The two insulating layers may be attached to the first electrode plate main body from the two sides, so as to form the insulating member. This helps simplify the assembly process of the first electrode plate and the insulating member.

In one or more of the foregoing optional embodiments, a thickness of the insulating layer is 7 µm to 30 µm. Defining the thickness of the insulating layer as greater than or equal to 7 µm can reduce a risk that the insulating layer is pierced by burrs, thereby improving the reliability. Defining the thickness of the insulating layer as less than or equal to 30 µm can reduce the space and weight occupied by the insulating layer, thereby reducing the loss in energy density of the battery cell.

In one or more of the foregoing optional embodiments, a difference between the thickness of the insulating layer and a thickness of the first current collector main body has an insulation value not greater than 10 µm. On the premise that an overcurrent of the first current collector main body meets requirements, a risk that the insulating layer is pierced by burrs is reduced, and the weight and space occupied by the insulating layer are reduced, thereby improving the energy density.

In one or more of the foregoing optional embodiments, a difference between the thickness of the insulating layer and a thickness of the first current collector main body has an insulation value not greater than 5 µm.

In one or more of the foregoing optional embodiments, the first end surface includes the tab lead-out region and the non-tab lead-out region, and the first tab extends from only the tab lead-out region and protrudes from the second insulating part in the direction away from the first current collector main body. Non-overlapping portions of the two connecting parts and the first tab are directly connected to form the first extending part, and the first extending part covers the non-tab lead-out region in the first direction. Overlapping portions of the two connecting parts and the first tab form the second extending part, and cover at least a portion of the first tab in the thickness direction. The first extending part can cover the non-tab lead-out region to shield burrs on the non-tab lead-out region, thereby reducing the risk of a short circuit.

In one or more of the foregoing optional embodiments, a dimension of the first extending part in the first direction is equal to a dimension of the second extending part in the first direction.

In one or more of the foregoing optional embodiments, the insulating member is of an integrally formed structure, thereby enhancing the stability of a connection between the insulating member and the first electrode plate main body.

In one or more of the foregoing optional embodiments, the first current collector main body further includes two second end surfaces. The two second end surfaces are respectively arranged at two ends of the first end surface, and each of the second end surfaces is connected to the two first surfaces. The insulating member further includes a third insulating part. The third insulating part is connected to the first insulating part and the second insulating part and covers a portion of the second end surface. The third insulating part may cover the burrs on the second end surface, thereby reducing the risk of a short circuit and improving the reliability. The arrangement of the third insulating part can further reduce a risk of exposing the first end surface due to an assembly error.

In one or more of the foregoing optional embodiments, the first current collector main body includes the two first end surfaces oppositely arranged in the first direction. The first direction is perpendicular to a thickness direction of the first electrode plate main body. The electrode assembly includes two insulating members. The two insulating members are respectively arranged on the outer sides of the two first end surfaces. The two insulating members may separate the burrs on the two first end surfaces from the second electrode plate, thereby further reducing the risk of a short circuit.

In one or more of the foregoing optional embodiments, the electrode assembly further includes a separator. The separator is configured to separate the first electrode plate from the second electrode plate. In the first direction, an end of the second insulating part away from the first insulating part exceeds the separator.

The second insulating part protrudes from the separator. When the first tab is bent, the second insulating part may limit the first tab, so as to reduce a risk that the first tab squeezes the separator, reduce folds of the separator, reduce a risk that the separator shrinks inward, and improve the reliability.

In one or more of the foregoing optional embodiments, the electrode assembly further includes a separator. The separator is configured to separate the first electrode plate from the second electrode plate. In the first direction, the end of the second insulating part away from the first insulating part does not exceed the separator, so as to reduce the amount of the second insulating part used, reduce the weight and space occupied by the second insulating part, and improve the energy density.

In one or more of the foregoing optional embodiments, the second electrode plate includes a second electrode plate main body, and the second electrode plate main body and the first electrode plate main body are arranged in a stacked manner. The second electrode plate main body includes a second current collector main body and a second active substance layer. The second current collector main body includes two second surfaces arranged opposite to each other and a third end surface connecting the two second surfaces. The second active substance layer is arranged on the second surface. The first end surface is located at an end of the first current collector main body in the first direction, and the third end surface is located at an end of the second current collector main body in the first direction. In the thickness direction, the insulating member separates the third end surface from the first electrode plate.

The insulating member can also separate the burrs on the third end surface from the first electrode plate, thereby reducing the risk of conduction between the burrs on the third end surface and the first electrode plate, reducing the possibility of thermal runaway caused by a short circuit, and improving the reliability of the battery cell.

In one or more of the foregoing optional embodiments, the first electrode plate is a positive electrode plate, and the second electrode plate is a negative electrode plate. Two ends of the second active substance layer exceed the first electrode plate main body in the first direction. The insulating member shields at least a portion of the first end surface. Even if the second active substance layer overlaps with the first end surface in the stacking direction, the second active substance layer is not easily in contact with the burrs on the first end surface. The second active substance layer may provide more embedding sites for active ions separated from the first active substance layer, thereby reducing the risk of active ion precipitation, improving the cycle performance of the battery cell, and improving the reliability.

In one or more of the foregoing optional embodiments, the insulating member has a melting point of 95 °C to 150 °C. During the charging and discharging process of the battery cell, the first current collector main body generates heat. The insulating member has a relatively high melting point, reducing a risk that the insulating member softens and falls off due to heat, and improving the reliability.

In one or more of the foregoing optional embodiments, the insulating member includes an adhesive, and the adhesive includes at least one of ethylene and a copolymer thereof, a polyolefin, a polyester, a polyurethane, a polyamide, styrene, and a block copolymer thereof. The adhesive has relatively high adhesive strength, and is not easy to fall off from the first electrode plate main body.

In one or more of the foregoing optional embodiments, the insulating member includes a substrate layer and an adhesive layer, and the substrate layer is connected to the first electrode plate main body by the adhesive layer. The substrate layer can enhance the strength of the insulating member and reduce the deformation of the insulating member during the attachment process. The adhesive layer can adhere the substrate layer to the first electrode plate main body, thereby reducing a risk that the substrate layer falls off from the first electrode plate main body.

In one or more of the foregoing optional embodiments, the substrate layer includes at least one of polyethylene terephthalate, polypropylene, polyethylene, and block copolymers thereof. The adhesive layer includes at least one of polyacrylate, styrene-butadiene rubber, polyisobutylene, or butyl rubber.

In one or more of the foregoing optional embodiments, the insulating member has an elastic modulus of 500 MPa to 3000 MPa, and optionally, the insulating member has an elastic modulus of 770 MPa to 1320 MPa. The insulating member has a relatively high elastic modulus, and may provide support for the first tab, thereby reducing a risk that the root part of the first tab is reversely inserted between the first electrode plate and the second electrode plate, and improving the reliability.

In one or more of the foregoing optional embodiments, the insulating member has a tensile strength of 949 kgf/cm² to 1363 kgf/cm². The insulating member has relatively high tensile strength, and is not easily deformed when being pulled by the first tab. Correspondingly, the insulating member can effectively limit deformation of the first tab, thereby reducing a risk that the root part of the first tab is reversely inserted between the first electrode plate and the second electrode plate, and improving the reliability.

In one or more of the foregoing optional embodiments, the insulating member is connected to the first active substance layer. The peel strength between the insulating member and the first active substance layer is higher than the peel strength between the first active substance layer and the first surface. The peel strength between the insulating member and the first active substance layer is relatively high, thereby reducing a risk that the insulating member falls off, and improving the reliability.

In one or more of the foregoing optional embodiments, the electrode assembly further includes a separator. The separator is configured to separate the first electrode plate from the second electrode plate. The first electrode plate, the separator, and the second electrode plate are wound. In a winding direction of the first electrode plate, two ends of the insulating member do not exceed the separator. The separator may restrain the insulating member to keep the insulating member attached to the first electrode plate main body, thereby reducing a risk that the insulating member falls off from the first electrode plate main body.

In one or more of the foregoing optional embodiments, the electrode assembly further includes a separator. The separator is configured to separate the first electrode plate from the second electrode plate. The first electrode plate main body is in a flat-plate shape. In a second direction, two ends of the insulating member do not exceed the separator. The second direction is perpendicular to the first direction and the thickness direction. The separator may restrain the insulating member to keep the insulating member attached to the first electrode plate main body, thereby reducing a risk that the insulating member falls off from the first electrode plate main body.

In a second aspect, the embodiments of the present application provide a battery cell, which includes a housing and the electrode assembly according to any one of the embodiments of the first aspect. The electrode assembly is accommodated in the housing.

In a third aspect, the embodiments of the present application provide a battery, which includes a plurality of the battery cells according to any one of the embodiments of the second aspect.

In a fourth aspect, the embodiments of the present application provide an electric device, which includes the battery according to any one of the embodiments of the third aspect. The battery is configured to provide electric energy.

### BRIEF DESCRIPTION OF THE DRAWINGS

To more clearly illustrate the technical solutions according to embodiments of the present application, the drawings required for illustrating the embodiments of the present application are briefly described below. Apparently, the drawings in the following description illustrate merely some embodiments of the present application, and those of ordinary skill in the art may still derive other drawings from these drawings without creative efforts.
FIG. 1 is a schematic structural diagram of a vehicle according to some embodiments of the present application;
FIG. 2 is an exploded schematic view of a battery according to some embodiments of the present application;
FIG. 3 is an exploded schematic view of a battery cell according to some embodiments of the present application;
FIG. 4 is a schematic top view of an electrode assembly according to some embodiments of the present application;
FIG. 5 is a schematic partial cross-sectional view taken along an A-A direction in FIG. 4;
FIG. 6 is a schematic diagram of a first electrode plate of an electrode assembly in a flattened state according to some embodiments of the present application;
FIG. 7 is a schematic cross-sectional view taken along an E-E direction in FIG. 6;
FIG. 8 is a schematic diagram of FIG. 6 from another perspective;
FIG. 9 is a schematic diagram of the first electrode plate shown in FIG. 6 connected to an insulating member;
FIG. 10 is a schematic diagram of one insulating member of an electrode assembly according to some embodiments of the present application;
FIG. 11 is a schematic cross-sectional view taken along a B-B direction in FIG. 9;
FIG. 12 is a cross-sectional view taken along a C-C direction in FIG. 9;
FIG. 13 is a schematic diagram of the first electrode plate and the insulating member shown in FIG. 9 from another perspective;
FIG. 14 is a schematic diagram of an insulating layer of an electrode assembly in a flattened state according to some embodiments of the present application;
FIG. 15 is a schematic diagram of a first electrode plate of an electrode assembly in an unfolded state according to some other embodiments of the present application;
FIG. 16 is a schematic diagram of the first electrode plate shown in FIG. 15 connected to an insulating member;
FIG. 17 is a schematic cross-sectional view taken along a D-D direction in FIG. 16;
FIG. 18 is a schematic diagram of an insulating member before being assembled to a first electrode plate according to some embodiments of the present application;
FIG. 19 is a schematic diagram of a first electrode plate and an insulating member of an electrode assembly in an unfolded state according to still other embodiments of the present application;
FIG. 20 is an enlarged schematic view of a circled portion in FIG. 19;
FIG. 21 is a schematic structural diagram of an insulating member of an electrode assembly according to some embodiments of the present application;
FIG. 22 is a schematic partial cross-sectional view of an electrode assembly according to some other embodiments of the present application;
FIG. 23 is a schematic top view of an electrode assembly according to still other embodiments of the present application;
FIG. 24 is a schematic cross-sectional view taken along an F-F direction in FIG. 23;
FIG. 25 is a schematic cross-sectional view of a first electrode plate and an insulating member of an electrode assembly according to still other embodiments of the present application;
FIG. 26 is a schematic diagram of an electrode assembly according to still other embodiments of the present application; and
FIG. 27 is a schematic diagram of a first electrode plate and an insulating member of an electrode assembly in an unfolded state according to still other embodiments of the present application.

The reference numerals are as follows:
1, vehicle; 2, battery; 3, controller; 4, motor; 5, case; 5a, first case part; 5b, second case part; 5c, accommodating space; 6, battery cell;
10, electrode assembly; 20, housing; 21, housing body; 22, end cover; 30, electrode terminal;
11, first electrode plate; 111, first electrode plate main body; 112, first current collector main body; 1121, first surface; 1121a, coated region; 1121b, uncoated region; 1122, first end surface; 1122a, tab lead-out region; 1122b, non-tab lead-out region; 1123, second end surface; 113, first active substance layer; 1131, main body region; 1132, thinned region; 114, first tab;
12, second electrode plate; 121, second electrode plate main body; 122, second current collector main body; 1221, second surface; 1222, third end surface; 123, second active substance layer; 124, second tab;
13, separator;
14, insulating member; 141, first insulating part; 142, second insulating part; 1421, first extending part; 1421a, first portion; 1421b, second portion; 1422, second extending part; 142a, channel; 143, third insulating part; 144, insulating layer; 144a, insulating main body; 144b, connecting part; 145, substrate layer; 146, adhesive layer; 147, recess;
V, winding direction; L, length direction; X, second direction; Y, thickness direction; Z, first direction.

### DETAILED DESCRIPTION

To make the objectives, technical solutions, and advantages of embodiments of the present application clearer, the technical solutions in the embodiments of the present application will be clearly described hereinafter with reference to the drawings in the embodiments of the present application. It is apparent that the described embodiments are some, but not all, embodiments of the present application. Based on the embodiments in the present application, all other embodiments obtained by those of ordinary skill in the art without creative efforts shall fall within the protection scope of the present application.

Unless otherwise defined, all technical and scientific terms used in the present application have the same meaning as commonly understood by those skilled in the art to which the present application belongs. The terms used in the specification of the present application are only used to describe specific embodiments and are not intended to limit the present application. The terms "include", "comprise", "have", "provided with", and any variants thereof in the specification and claims of the present application and the above description of the drawings are intended to cover a non-exclusive inclusion. The terms "first", "second", and the like in the specification and claims of the present application and the above drawings are used to distinguish different objects and are not intended to describe a specific order or priority.

Reference in the present application to "embodiment" means that a particular feature, structure, or characteristic described in connection with the embodiment can be included in at least one embodiment of the present application. The references of the word in the context of the specification do not necessarily refer to the same embodiment, nor to separate or alternative embodiments exclusive of other embodiments.

In the description of the present application, it should be noted that unless otherwise explicitly specified or limited, the terms "mount", "interconnect", "connect", and "attach" shall be construed broadly and may be, for example, fixed connection, detachable connection, or integrated connection, or direct connection, indirect connection via an intermediate, or a communication between interiors of two elements. For those of ordinary skill in the art, the specific meanings of the aforementioned terms in the present application can be understood according to specific conditions.

In the present application, the term "and/or" is merely a way to describe the association relationship between associated objects and indicates that there may be three relationships. For example, A and/or B may indicate that: only A is present, both A and B are present, and only B is present. In addition, the character "/" in the present application generally indicates an "or" relationship between the associated objects before and after the "/".

In the embodiments of the present application, the same reference numerals represent the same components, and for the sake of brevity, detailed descriptions of the same components are omitted in different embodiments. It should be understood that the thickness, length, width, and other dimensions of various components in the embodiments of the present application shown in the drawings, as well as the overall thickness, length, width, and other dimensions of the integrated device are only exemplary and should not be construed as limiting the present application in any way.

The term "plurality of" used in the present application refers to no less than two (including two).

In the embodiments of the present application, the battery cell may be a secondary battery. The secondary battery refers to a battery cell that can be reused by activating the active material through charging after the battery cell is discharged.

The battery cell may be a lithium-ion battery cell, a sodium-ion battery cell, a sodium-lithium-ion battery cell, a lithium metal battery cell, a sodium metal battery cell, a lithium-sulfur battery cell, a magnesium-ion battery cell, a nickel-hydrogen battery cell, a nickel-cadmium battery cell, a lead storage battery cell, or the like.

As an example, the battery cell may be a cylindrical battery cell, a prismatic battery cell, or a battery cell of other shapes. The prismatic battery cell includes a square-shell battery cell, a blade-shaped battery cell, and a polygonal prismatic battery, and the polygonal prismatic battery is, for example, a hexagonal prismatic battery. This is not particularly limited in the present application.

The battery mentioned in the embodiments of the present application refers to a single physical module including one or a plurality of battery cells to provide higher voltage and capacity.

In some embodiments, the battery may be a battery module, and when a plurality of battery cells are provided, the plurality of battery cells are arranged and fixed to form one battery module.

In some embodiments, the battery may be a battery pack. The battery pack includes a case and a battery cell, and the battery cell or the battery module is accommodated in the case.

In some embodiments, the case may be a portion of the chassis structure of the vehicle. For example, a portion of the case may become at least a portion of the floor of the vehicle, or a portion of the case may become at least a portion of a crossmember and a longitudinal member of the vehicle.

In some embodiments, the battery may be an energy storage device. The energy storage device includes an energy storage container, an energy storage electrical cabinet, and the like.

A battery cell generally includes an electrode assembly and a housing, and the electrode assembly is accommodated within the housing. The electrode assembly includes a positive electrode, a negative electrode, and a separator. During the charging and discharging process of the battery cell, active ions (such as lithium ions) are intercalated and deintercalated back and forth between the positive electrode and the negative electrode. The separator is arranged between the positive electrode and the negative electrode, which can reduce the risk of a short circuit between the positive electrode and the negative electrode while allowing the passage of active ions.

The housing is configured to encapsulate components such as the electrode assembly and the electrolyte. The housing may be a steel housing, an aluminum housing, a plastic housing (such as polypropylene), a composite metal housing (such as a copper-aluminum composite housing), an aluminum-plastic film, or the like.

In some embodiments, the positive electrode may be a positive electrode plate, and the positive electrode plate may include a positive electrode current collector and a positive electrode active substance layer arranged on at least one surface of the positive electrode current collector. The negative electrode may be a negative electrode plate, and the negative electrode plate may include a negative electrode current collector and a negative electrode active substance layer arranged on at least one surface of the negative electrode current collector.

During the manufacturing process of an electrode plate (a positive electrode plate or a negative electrode plate), it is usually necessary to perform cutting (e.g., an electrode plate slitting process or a tab die cutting process) to form a desired dimension and shape. However, after cutting, the current collector is prone to generation of burrs at the cutting position. During charging and discharging process of the battery cell, the burrs may pierce the separator and conduct the positive and negative electrodes, causing the risk of a short circuit and affecting the reliability of the battery cell.

In view of this, an embodiment of the present application provides a technical solution in which an insulating member is arranged on an electrode plate to block burrs on the end surface of a current collector, thereby reducing the risk of the burrs conducting positive and negative electrodes, and improving the reliability of a battery cell.

The electrode assembly described in the embodiments of the present application is applicable to a battery cell, a battery, and an electric device using the battery.

The battery disclosed in the embodiments of the present application can be used in electric devices that use batteries as the power source or in various energy storage systems that use batteries as the energy storage element. The electric device may be, but is not limited to, a mobile phone, a tablet, a laptop computer, an electric toy, an electric tool, an electric bicycle, an electric vehicle, a ship, a spacecraft, or the like. The electric toy may include stationary or mobile electric toys, such as game consoles, electric car toys, electric ship toys, or electric airplane toys. The spacecraft may include airplanes, rockets, space shuttles, spaceships, and the like.

For ease of explanation, the following embodiments will be described by taking a vehicle as an example of the electric device.

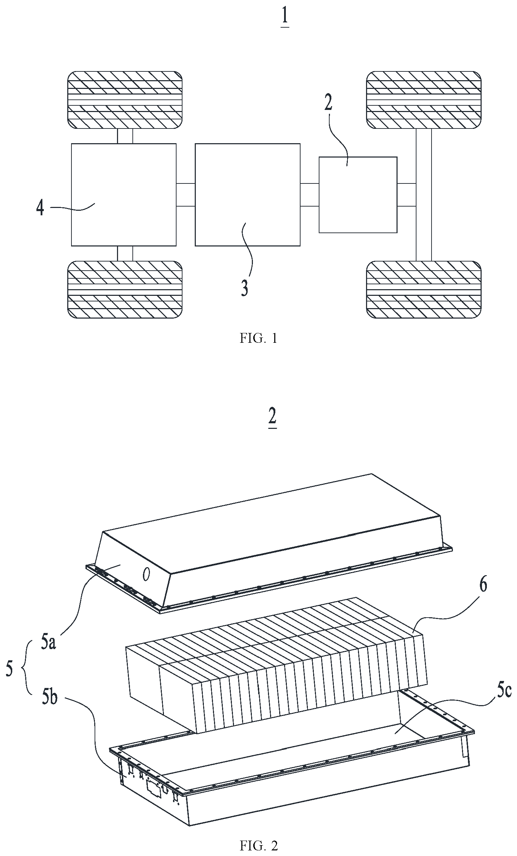

FIG. 1 is a schematic structural diagram of a vehicle according to some embodiments of the present application.

As shown in FIG. 1, a battery 2 is arranged inside a vehicle 1, and the battery 2 may be arranged at the bottom, the head, or the tail of the vehicle 1. The battery 2 may be configured to power the vehicle 1. For example, the battery 2 may serve as an operation power source for the vehicle 1.

The vehicle 1 may further include a controller 3 and a motor 4. The controller 3 is configured to control the battery 2 to power the motor 4, e.g., for the operation power needed by the vehicle 1 for start-up, navigation, and driving.

In some embodiments of the present application, the battery 2 may not only serve as the operation power source for the vehicle 1, but also as a driving power source for the vehicle 1 to, replacing or partially replacing fuel or natural gas, provide driving power for the vehicle 1.

FIG. 2 is an exploded schematic view of a battery according to some embodiments of the present application. As shown in FIG. 2, the battery 2 includes a case 5 and battery cells 6, and the battery cells 6 are accommodated in the case 5.

The case 5 is configured to accommodate the battery cells 6, and the case 5 may be of various structures. In some embodiments, the case 5 may include a first case part 5a and a second case part 5b. The first case part 5a and the second case part 5b are mutually lidded with each other. The first case part 5a and the second case part 5b jointly define an accommodating space 5c for accommodating the battery cell. The second case part 5b may be of a hollow structure with one end open, the first case part 5a is of a plate-like structure, and the first case part 5a lids the open side of the second case part 5b to form the case 5 having the accommodating space 5c. The first case part 5a and the second case part 5b may each also be of a hollow structure with one end open, and the open side of the first case part 5a lids the open side of the second case part 5b to form the case 5 having the accommodating space 5c. Certainly, the first case part 5a and the second case part 5b may be of various shapes, such as a cylinder and a rectangular parallelepiped.

To improve the sealing performance after the first case part 5a and the second case part 5b are connected, a sealing member, such as a sealant or a seal ring, may be further arranged between the first case part 5a and the second case part 5b.

If the first case part 5a lids the top part of the second case part 5b, the first case part 5a may also be referred to as an upper case cover, and the second case part 5b may also be referred to as a lower case body.

In the battery 2, one or a plurality of battery cells 6 may be provided. If a plurality of battery cells 6 are provided, the plurality of battery cells 6 may be connected in series, in parallel, or in series-parallel. The series-parallel connection means that both series connection and parallel connection are present in the connection of the plurality of battery cells 6. The plurality of battery cells 6 may be directly connected in series, in parallel, or in series-parallel, and then the whole formed by the plurality of battery cells 6 is accommodated in the case 5. Certainly, the situation may be that the plurality of battery cells are first connected in series, in parallel, or in series-parallel to form battery modules, and then the plurality of battery modules are connected in series, in parallel, or in series-parallel to form a whole and accommodated in the case 5.

Illustratively, the battery cell may be the smallest unit constituting the battery.

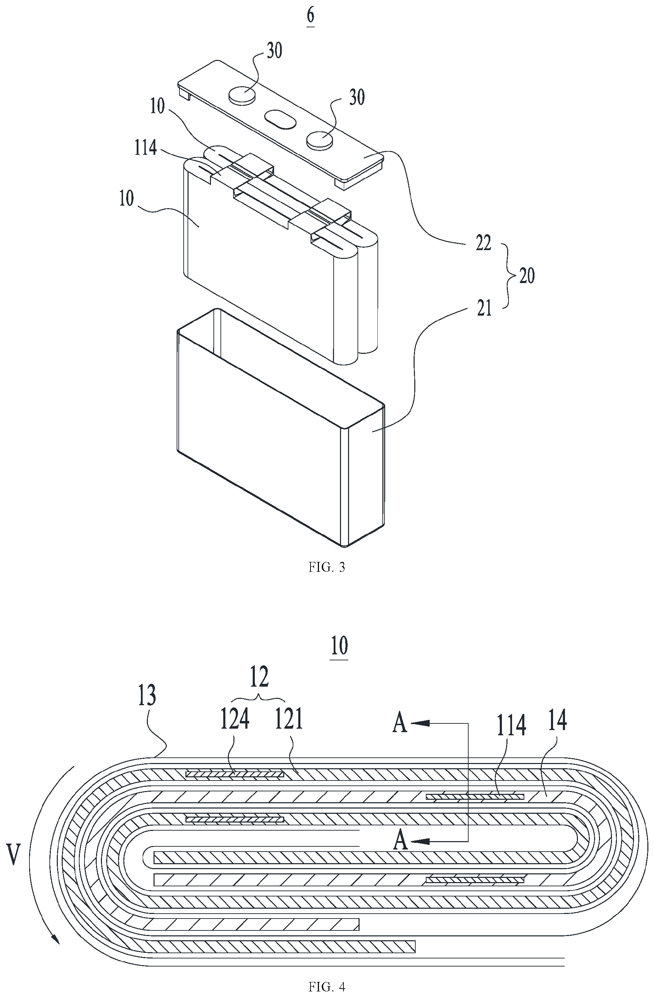

FIG. 3 is an exploded schematic view of a battery cell according to some embodiments of the present application.

As shown in FIG. 3, in some embodiments, the battery cell 6 includes a housing 20 and an electrode assembly 10 accommodated in the housing 20.

The electrode assembly 10 includes a positive electrode and a negative electrode. During the charging and discharging processes of the battery cell 6, active ions (such as lithium ions) are intercalated and deintercalated back and forth between the positive electrode and the negative electrode. Optionally, the electrode assembly 10 further includes a separator arranged between the positive electrode and the negative electrode. The separator can reduce the risk of a short circuit between the positive electrode and the negative electrode while allowing the passage of active ions.

The housing 20 is configured to encapsulate components such as the electrode assembly 10 and the electrolyte. The housing 20 may be a steel housing, an aluminum housing, a plastic housing (such as polypropylene), a composite metal housing (such as a copper-aluminum composite housing 20), an aluminum-plastic film, or the like.

In some embodiments, the housing 20 includes a housing body 21 and an end cover 22. The housing body 21 is provided with an opening, and the end cover 22 is configured to lid the opening.

The housing body 21 is a component configured to form the internal cavity of the battery cell 6 in combination with the end cover 22. The formed internal cavity may be used to accommodate the electrode assembly 10, the electrolyte, and other components.

The housing body 21 and the end cover 22 may be separate components. Illustratively, an opening may be formed in the housing body 21, and the end cover 22 lids the opening to form the internal cavity of the battery cell 6.

The housing body 21 may be in various shapes and dimensions, such as a rectangular parallelepiped, a cylinder, and a hexagonal prism. Specifically, the shape of the housing body 21 may be determined based on the specific shape and dimension of the electrode assembly 10. The housing body 21 may be made of a plurality of materials. For example, the material of the housing body 21 includes, but is not limited to, copper, iron, aluminum, stainless steel, aluminum alloy, aluminum-plastic film, steel-plastic film, and the like.

The shape of the end cover 22 may be adapted to the shape of the housing body 21 to match the housing body 21. The end cover 22 and the housing body 21 may be made of the same or different materials. Optionally, the end cover 22 may be made of a material with a certain hardness and strength (e.g., copper, iron, aluminum, stainless steel, aluminum alloy, plastic, or the like), such that the end cover 22 is not easily deformed when being compressed or collided. This provides the battery cell 6 with higher structural strength and improved reliability.

The end cover 22 is connected to the housing body 21 by welding, bonding, snap-fitting, or other methods.

The housing body 21 may have one end open, or may have two ends open. In some examples, the housing body 21 may be of a structure with one side open. One end cover 22 is provided and lids the housing body 21. In some other examples, the housing body 21 may also be of a structure with two sides open. Two end covers 22 are provided, and the two end covers 22 lid the two openings of the housing body 21, respectively.

In some embodiments, the battery cell 6 includes an electrode terminal 30. The electrode terminal 30 is electrically connected to the electrode assembly 10 for outputting or inputting the electric energy of the battery cell 6.

In some embodiments, the battery cell 6 further includes an electrolyte contained in the housing 20. The electrolyte plays a role of conducting ions between the positive electrode and the negative electrode. The electrolyte may be liquid-state, gel-state, or solid-state.

In some embodiments, the liquid-state electrolyte includes an electrolyte salt and a solvent.

In some embodiments, the electrolyte salt may include at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluorobis(oxalato)phosphate, and lithium tetrafluoro(oxalato)phosphate.

In some embodiments, the solvent may include at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and diethyl sulfone. The solvent may also be selected from an ether solvent. The ether solvent may include one or more of ethylene glycol dimethyl ether, ethylene glycol diethyl ether, diethylene glycol dimethyl ether, triethylene glycol dimethyl ether, tetraethylene glycol dimethyl ether, 1,3-dioxolane, tetrahydrofuran, methyl tetrahydrofuran, diphenyl ether, and crown ether.

In some embodiments, the gel-state electrolyte includes a skeleton network with a polymer as an electrolyte, combined with an ionic liquid-lithium salt.

In some embodiments, the solid-state electrolyte includes a polymer solid-state electrolyte, an inorganic solid-state electrolyte, and a composite solid-state electrolyte.

As an example, the polymer solid-state electrolyte may be polyether (polyethylene oxide), polysiloxane, polycarbonate, polyacrylonitrile, polyvinylidene fluoride, polymethyl methacrylate, single-ion polymer, polyionic liquid-lithium salt, cellulose, or the like.

As an example, the inorganic solid-state electrolyte may be one or more of an oxide solid electrolyte (crystalline perovskite, sodium superionic conductor, garnet, and amorphous LiPON thin film), a sulfide solid electrolyte (crystalline lithium superionic conductor (lithium germanium phosphorus sulfur, argyrodite), and amorphous sulfide), a halide solid electrolyte, a nitride solid electrolyte, and a hydride solid electrolyte.

As an example, the composite solid-state electrolyte is formed by adding an inorganic solid-state electrolyte filler to the polymer solid electrolyte.

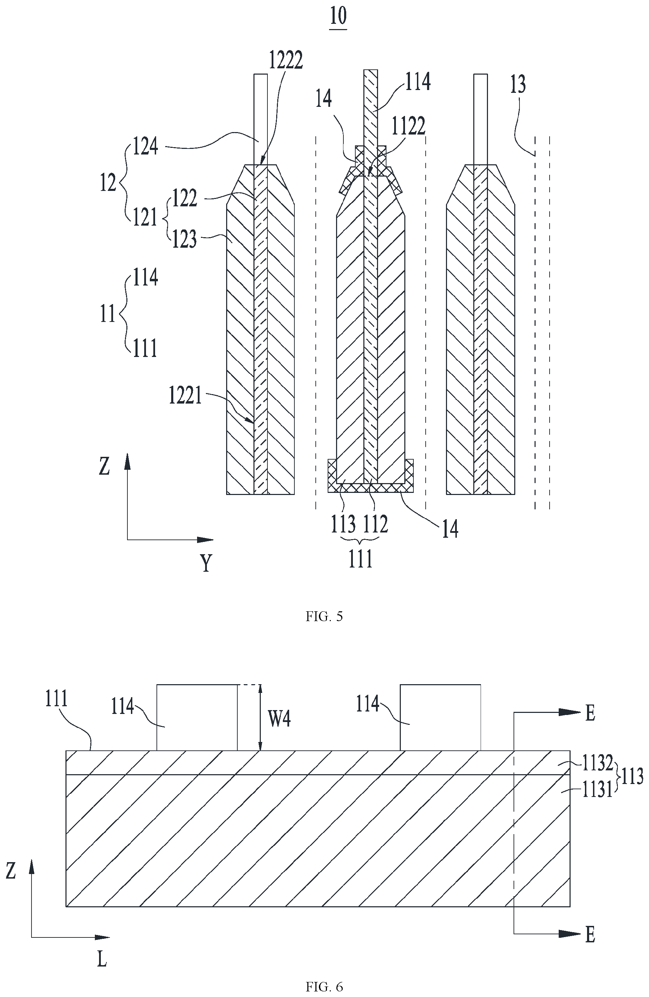

FIG. 4 is a schematic top view of an electrode assembly according to some embodiments of the present application; FIG. 5 is a schematic partial cross-sectional view taken along an A-A direction in FIG. 4.

Referring to FIGs. 4 and 5, the electrode assembly 10 of the embodiments of the present application includes a first electrode plate 11 and a second electrode plate 12 that have opposite polarities.

Illustratively, one of the first electrode plate 11 and the second electrode plate 12 is a positive electrode plate, and the other is a negative electrode plate.

In some embodiments, the positive electrode plate may include a positive electrode current collector and a positive electrode active substance layer arranged on at least one surface of the positive electrode current collector.

As an example, the positive electrode current collector has two surfaces opposite to each other in its own thickness direction, and the positive electrode active substance layer is arranged on either or both of the two opposite surfaces of the positive electrode current collector.

As an example, carbon, a metal foil or a composite current collector may be used as the positive electrode current collector. For example, for the metal foil, stainless steel, copper, aluminum, nickel, carbon electrode, nickel, titanium, aluminum or stainless steel treated with silver on the surface, or the like may be used. The composite current collector may include a polymer material base layer and a metal layer. The composite current collector may be fabricated by forming a metal material (aluminum, aluminum alloy, nickel, nickel alloy, titanium, titanium alloy, silver, silver alloy, or the like) on a polymer material substrate (such as a substrate made of polypropylene, polyethylene terephthalate, polybutylene terephthalate, polystyrene, and polyethylene).

As an example, the positive electrode active substance layer includes a positive electrode active material, and the positive electrode active material may include at least one of the following materials: a lithium-containing phosphate, a lithium transition metal oxide, and respective modified compounds thereof. Other conventional materials that can be used as a positive electrode active substance layer of the battery may also be used as the positive electrode active materials. These positive electrode active materials may be used alone or in combination of two or more. Examples of the lithium-containing phosphate may include, but are not limited to, at least one of lithium iron phosphate (such as LiFePO₄, also referred to as LFP), a composite material of lithium iron phosphate and carbon, lithium manganese phosphate (such as LiMnPO₄), a composite material of lithium manganese phosphate and carbon, lithium manganese iron phosphate, and a composite material of lithium manganese iron phosphate and carbon. Examples of the lithium transition metal oxide may include, but are not limited to, at least one of a lithium cobalt oxide (such as LiCoO₂), a lithium nickel oxide (such as LiNiO₂), a lithium manganese oxide (such as LiMnO₂ or LiMn₂O₄), a lithium nickel cobalt oxide, a lithium manganese cobalt oxide, a lithium nickel manganese oxide, a lithium nickel cobalt manganese oxide (such as LiNi_{1/3}Co_{1/3}Mn_{1/3}O₂ (also referred to as NCM333), LiNi_{0.5}Co_{0.2}Mn_{0.3}O₂ (also referred to as NCM523), LiNi_{0.5}Co_{0.25}Mn_{0.25}O₂ (also referred to as NCM211), LiNi_{0.6}Co_{0.2}Mn_{0.2}O₂ (also referred to as NCM622), LiNi_{0.8}Co_{0.1}Mn_{0.1}O₂ (also referred to as NCM811)), a lithium nickel cobalt aluminum oxide (such as LiNi_{0.80}Co_{0.15}Al_{0.05}O₂), and modified compounds thereof.

In some embodiments, the negative electrode plate may include a negative electrode current collector and a negative electrode active substance layer arranged on at least one surface of the negative electrode current collector.

As an example, a metal foil, a foam metal, or a composite current collector may be used as the negative electrode current collector. For example, for the metal foil, aluminum or stainless steel treated with silver on the surface, stainless steel, copper, aluminum, nickel, carbon electrode, nickel, titanium, or the like may be used. The foam metal may be foam nickel, foam copper, foam aluminum, foam alloy, foam carbon, or the like. The composite current collector may include a polymer material base layer and a metal layer. The composite current collector may be fabricated by forming a metal material (copper, copper alloy, nickel, nickel alloy, titanium, titanium alloy, silver, silver alloy, or the like) on a polymer material substrate (such as a substrate made of polypropylene, polyethylene terephthalate, polybutylene terephthalate, polystyrene, and polyethylene).

As an example, the negative electrode active substance layer includes a negative electrode active material. The negative electrode active material may be a negative electrode active material known in the art for use in battery cells. As an example, the negative electrode active material may include at least one of the following materials: artificial graphite, natural graphite, soft carbon, hard carbon, a silicon-based material, a tin-based material, lithium titanate, and the like. The silicon-based material may include at least one of elemental silicon, a silicon-oxygen compound, a silicon-carbon composite, a silicon-nitrogen composite, and a silicon alloy. The tin-based material may include at least one of elemental tin, a tin-oxygen compound, and a tin alloy. Other conventional materials that can be used as a negative electrode active material of the battery may also be used as the negative electrode active material of the present application. These negative electrode active materials may be used alone or in combination of two or more.

In some embodiments, the material of the positive electrode current collector may be aluminum, and the material of the negative electrode current collector may be copper.

In some embodiments, the electrode assembly 10 further includes a separator 13, the separator 13 being configured to separate the first electrode plate 11 from the second electrode plate 12. The separator 13 may reduce the risk of a short circuit in the positive and negative electrodes while allowing the passage of active ions.

In some embodiments, the separator 13 includes a separation film. For the separation film of the present application, any porous-structure separation film known to have good chemical stability and mechanical stability may be selected and used.

As an example, the main material of the separation film may include at least one of glass fiber, non-woven fabric, polyethylene, polypropylene, polyvinylidene fluoride, and ceramic. The separation film may be a single-layer film or a multi-layer composite film. When the separation film is a multi-layer composite film, the materials of the layers may be the same or different. The separator 13 may be a separate component located between the positive electrode and the negative electrode, or may be attached to a surface of the positive electrode and the negative electrode.

In some embodiments, the separator 13 is a solid-state electrolyte. The solid-state electrolyte is arranged between the positive electrode plate and the negative electrode plate, serving both to transport ions and to isolate the positive electrode and the negative electrode.

In some embodiments, the electrode assembly 10 is of a wound structure. Illustratively, the first electrode plate 11 and the second electrode plate 12 are both of strip-shaped structures, and the first electrode plate 11, the separator 13 and the second electrode plate 12 are wound into a wound structure.

In some embodiments, the electrode assembly 10 is of a stacked structure.

As an example, a plurality of first electrode plates 11 and a plurality of second electrode plates 12 may be provided, and the plurality of first electrode plates 11 and the plurality of second electrode plates 12 are alternately stacked.

As an example, a plurality of first electrode plates 11 may be provided, and the second electrode plate 12 is folded to form a plurality of folded segments arranged in a stacked manner, with one first electrode plate 11 arranged between adjacent folded segments.

As an example, the first electrode plate 11 and the second electrode plate 12 are both folded to form a plurality of folded segments arranged in a stacked manner.

As an example, a plurality of separators 13 may be arranged, and each separator is arranged between any adjacent first electrode plates 11 or second electrode plates 12 separately.

As an example, the separators 13 may be arranged continuously between any adjacent first electrode plates 11 or second electrode plates 12 by means of folding or winding.

In some embodiments, the shape of the electrode assembly 10 may be cylindrical, flat, multi-prismatic, or the like.

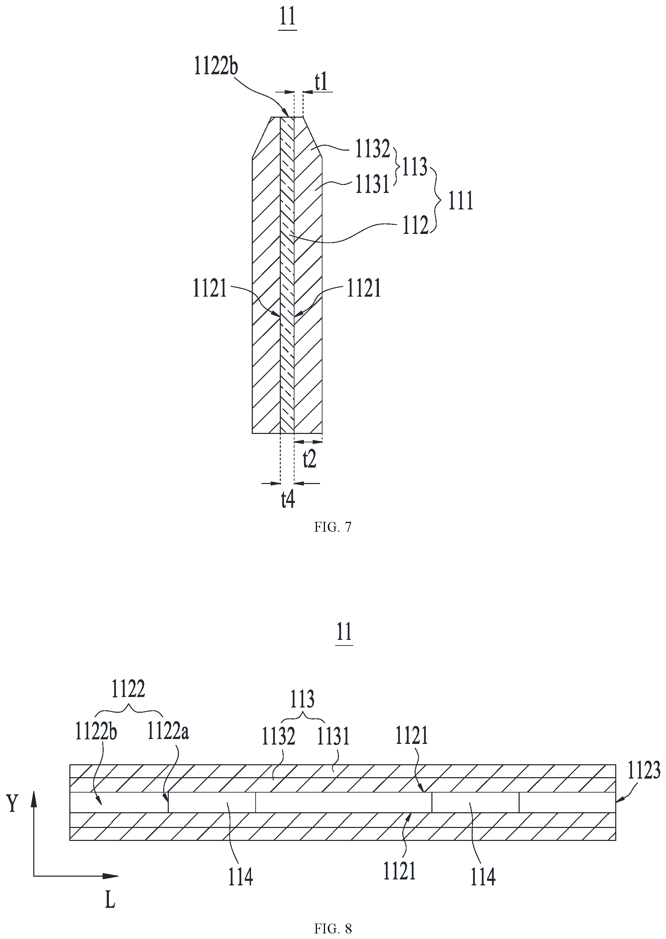

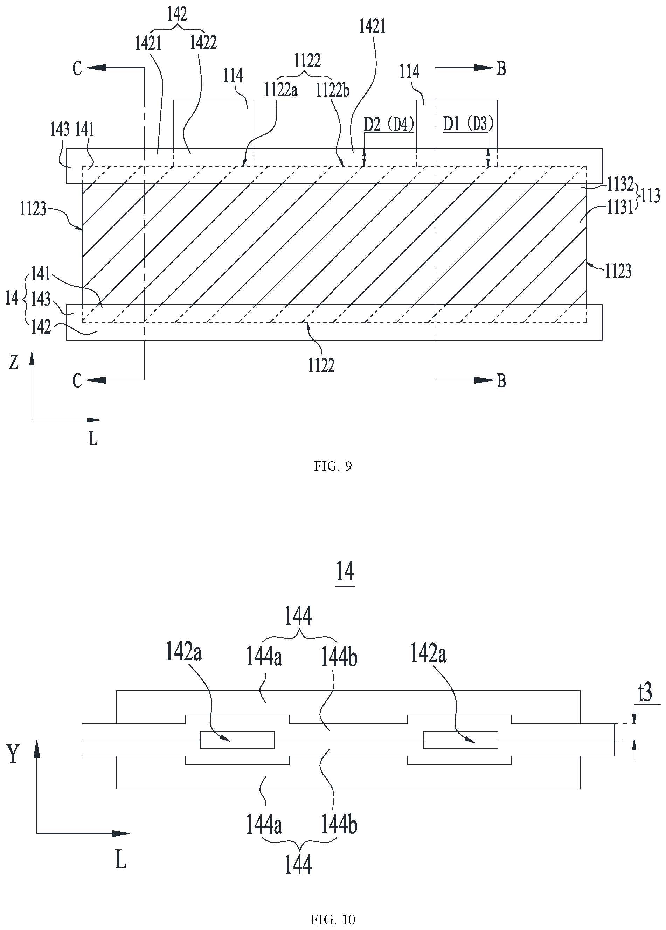

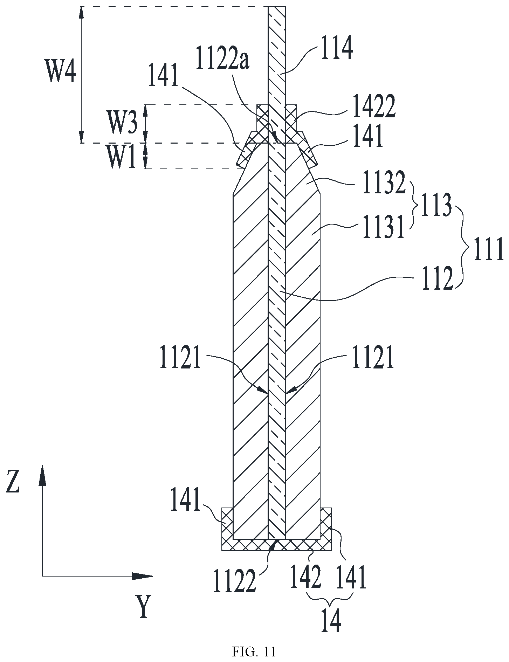

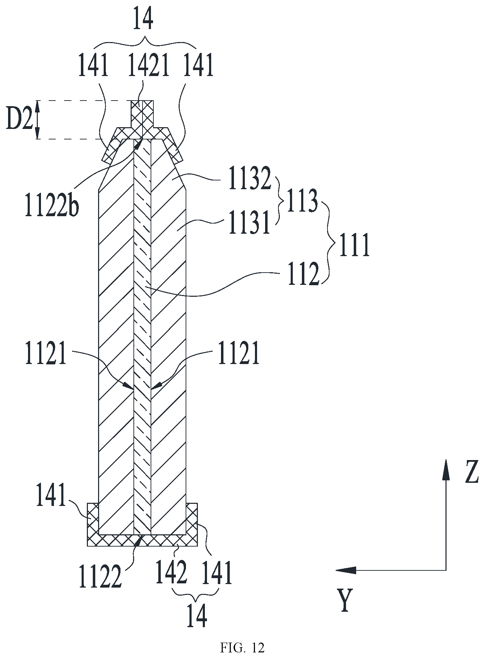

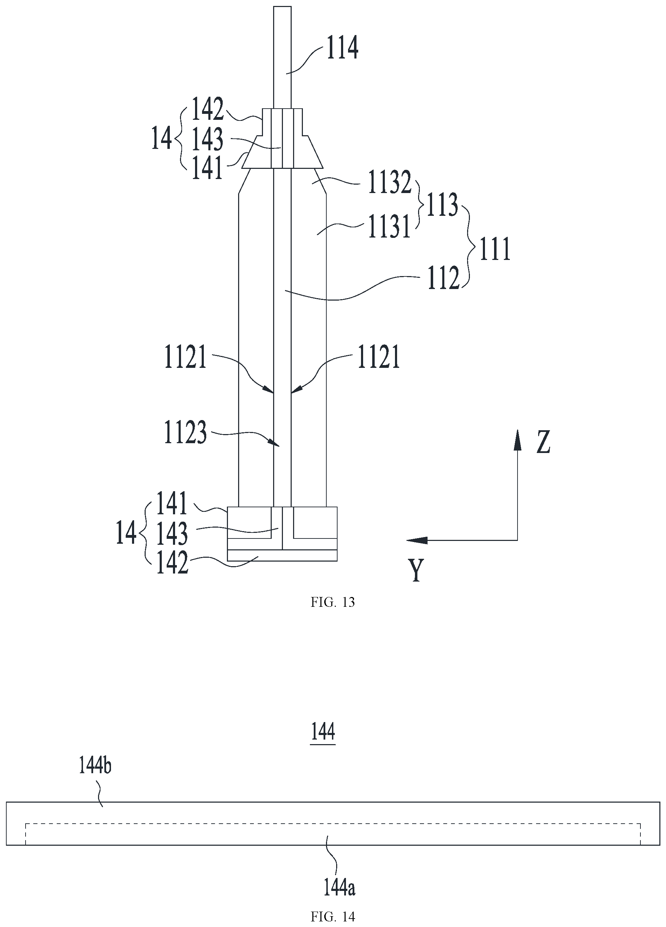

FIG. 6 is a schematic diagram of a first electrode plate of an electrode assembly in a flattened state according to some embodiments of the present application; FIG. 7 is a schematic cross-sectional view taken along an E-E direction in FIG. 6; FIG. 8 is a schematic diagram of FIG. 6 from another perspective; FIG. 9 is a schematic diagram of the first electrode plate shown in FIG. 6 connected to an insulating member, where a portion of the first electrode plate covered by the insulating member is shown by a dashed line; FIG. 10 is a schematic diagram of an insulating member of an electrode assembly according to some embodiments of the present application; FIG. 11 is a schematic cross-sectional view taken along a B-B direction in FIG. 9; FIG. 12 is a cross-sectional view taken along a C-C direction in FIG. 9; FIG. 13 is a schematic diagram of the first electrode plate and the insulating member shown in FIG. 9 from another perspective; FIG. 14 is a schematic diagram of an insulating layer of an electrode assembly in a flattened state according to some embodiments of the present application, where a boundary between an insulating main body and a connecting part is shown by a dashed line.

Referring to FIGs. 4 to 14, an embodiment of the present application provides an electrode assembly 10, which includes a first electrode plate 11 and a second electrode plate 12 that have opposite polarities.

The first electrode plate 11 includes a first electrode plate main body 111. The first electrode plate main body 111 includes a first current collector main body 112 and a first active substance layer 113. The first current collector main body 112 includes two first surfaces 1121 arranged opposite to each other in a thickness direction Y thereof and a first end surface 1122 connecting the two first surfaces 1121. The first active substance layer 113 is arranged on the first surface 1121.

In some examples, the first electrode plate 11 is a positive electrode plate. The positive electrode current collector may include a first current collector main body 112, and the first active substance layer 113 is a positive electrode active substance layer. In some other examples, the first electrode plate 11 is a negative electrode plate, the negative electrode current collector includes a first current collector main body 112, and the first active substance layer 113 is a negative electrode active substance layer.

The first active substance layer 113 may be arranged on the first surface 1121 as a whole. Alternatively, a portion of the first active substance layer 113 may be arranged at another position. For example, the first electrode plate 11 further includes a first tab 114 connected to the first current collector main body 112, and a portion of the first active substance layer 113 may be arranged at a root part of the first tab 114 close to the first current collector main body 112.

In the embodiments of the present application, a first active substance layer 113 may be arranged on one first surface 1121, or first active substance layers 113 may be arranged on two first surfaces 1121.

Illustratively, the first current collector main body 112 has a relatively small thickness, the first end surface 1122 has a relatively small dimension in the thickness direction Y of the first electrode plate main body 111, and the first end surface 1122 may be approximately a line. Optionally, the first current collector main body 112 has a thickness of 2 µm to 30 µm. Optionally, the first current collector main body 112 has a thickness of 5 µm to 15 µm.

Illustratively, at least a portion of the first end surface 1122 is formed in a cutting process of the first electrode plate 11.

In some embodiments, the electrode assembly 10 further includes an insulating member 14 connected to the first electrode plate main body 111. At least a portion of the insulating member 14 is arranged on the outer side of the first end surface 1122 in a first direction Z. The first direction Z is perpendicular to the thickness direction Y.

Illustratively, the expression "at least a portion of the insulating member 14 is arranged on the outer side of the first end surface 1122 in the first direction Z" does not require that the insulating member 14 overlaps with the first end surface 1122 in the first direction Z, provided that at least a portion of the insulating member 14 protrudes from the first end surface 1122 in the first direction Z.

Illustratively, at least a portion of the first end surface 1122 overlaps with the insulating member 14 in the thickness direction.

The first current collector main body 112 may be provided with one first end surface 1122, or may be provided with a plurality of first end surfaces 1122. Optionally, the first current collector main body 112 is provided with a plurality of first end surfaces 1122, and an insulating member 14 is correspondingly arranged on the outer side of each first end surface 1122.

The insulating member 14 may be directly connected to the first active substance layer 113, or may be directly connected to the first current collector main body 112, or may be directly connected to both the first active substance layer 113 and the first current collector main body 112.

The insulating member 14 may be of an integrally formed structure. Alternatively, the insulating member 14 may be assembled from at least two separately formed components.

One or a plurality of insulating members 14 may be provided.

The insulating member 14 may be connected to the first electrode plate main body 111 in a plurality of manners. For example, the insulating member 14 may be adhesively connected to the first electrode plate main body 111. Alternatively, the insulating member 14 may not be adhesively connected to the first electrode plate main body 111, but may be connected to the first electrode plate main body 111 in an attached manner.

In the embodiments of the present application, the insulating member 14 may separate burrs on the first end surface 1122 from the second electrode plate 12, thereby reducing the risk of conduction between the burrs and the second electrode plate 12 and reducing the possibility of thermal runaway caused by a short circuit, improving the reliability of the battery cell 6.

Illustratively, the insulating member 14 may separate the burrs from the separator 13, thereby reducing a risk that the burrs pierce the separator 13.

In some embodiments, the insulating member 14 includes two first insulating parts 141 and a second insulating part 142. The two first insulating parts 141 are respectively located on two sides of the first electrode plate main body 111 in the thickness direction Y and connected to the first electrode plate main body 111. The second insulating part 142 connects the two first insulating parts 141 and is arranged on the outer side of the first end surface 1122 in the first direction Z.

Illustratively, in the thickness direction Y, the projection of the first insulating part 141 is located within the projection of the first electrode plate main body 111, and the projection of the second insulating part 142 does not overlap with the projection of the first electrode plate main body 111.

The shapes of the two first insulating parts 141 may be the same or different.

The first insulating part 141 may be connected to the first active substance layer 113, or may be connected to the first current collector main body 112.

The arrangement of two first insulating parts 141 can increase a connection area between the insulating member 14 and the first electrode plate main body 111 and reduce a risk that the insulating member 14 falls off. The second insulating part 142 may separate the burrs on the first end surface 1122 from the second electrode plate, thereby reducing the risk of a short circuit.

In some embodiments, the second insulating part 142 covers at least a portion of the first end surface 1122 to wrap the burrs on the first end surface 1122, thereby further reducing the risk of a short circuit.

In the first direction, the second insulating part 142 at least partially overlaps with the first end surface 1122 to cover at least a portion of the first end surface 1122.

The second insulating part 142 may completely cover the first end surface 1122, or may cover only a portion of the first end surface 1122.

In some embodiments, the first electrode plate 11 further includes a first tab 114. The first tab 114 is connected to the first current collector main body 112.

In some examples, the first current collector main body 112 and the first tab 114 may be of an integrally formed structure. In some other examples, the first tab 114 and the first current collector main body 112 may be separately formed and connected by welding or otherwise.

One or a plurality of first tabs 114 may be provided.

In some embodiments, the first tab 114 is integrally formed with the first current collector main body 112. Illustratively, the first tab 114 may be formed by using a die cutting process. During the forming process of the first electrode plate, a portion of the first electrode plate is removed by using a die cutting process, thereby forming a protruding first tab 114.

In some embodiments, the first end surface 1122 is located at one end of the first current collector main body 112 in the first direction Z.

Illustratively, after the first electrode plate 11 is flattened, the first end surface 1122 may be located at one end of the first current collector main body 112 along a length direction L of the first electrode plate 11, or may be located at one end of the first current collector main body 112 along a width direction of the first electrode plate main body 111.

In some embodiments, the first current collector main body 112 is provided with two first end surfaces 1122 oppositely arranged in the first direction Z. An insulating member 14 is arranged on at least one first end surface 1122.

In some embodiments, the electrode assembly 10 is of a wound structure. Optionally, the first direction Z may be parallel to a winding axis of the electrode assembly 10.

In some embodiments, the first electrode plate 11 further includes a first tab 114. The first tab 114 extends outward from the first end surface 1122 in the first direction Z.

Illustratively, the first current collector main body 112 is provided with two first end surfaces 1122, and all first tabs 114 extend outward from the same first end surface 1122. Alternatively, a plurality of first tabs 114 may be provided. One portion of the first tabs 114 may extend outward from one first end surface 1122, and the other portion of the first tabs 114 may extend outward from the other first end surface 1122.

In some embodiments, the first tab 114 extends outward from the first end surface 1122 in the first direction Z and passes through the second insulating part 142.

The second insulating part 142 may shield burrs formed on the first end surface 1122 during the forming process of the first tab 114, thereby reducing the risk of a short circuit.

In some embodiments, the first end surface 1122 includes a tab lead-out region 1122a and a non-tab lead-out region 1122b. The first tab 114 extends from only the tab lead-out region 1122a, and protrudes from the second insulating part 142 in the first direction Z toward a direction away from the first current collector main body 112.

One or a plurality of tab lead-out regions 1122a may be provided. Illustratively, the number of the tab lead-out regions 1122a corresponds to the number of the first tabs 114. After the first tab 114 is cut off, the tab lead-out region 1122a is exposed.

One or a plurality of non-tab lead-out regions 1122b may be provided.

In some examples, a plurality of tab lead-out regions 1122a and a plurality of non-tab lead-out regions 1122b may be provided, and the plurality of tab lead-out regions 1122a and the plurality of non-tab lead-out regions 1122b are alternately arranged.

The first tab 114 protrudes from the second insulating part 142, to facilitate connection to another conductive structure, thereby reducing a risk that the second insulating part 142 interferes with the conductive structure.

In some embodiments, the second insulating part 142 covers at least a portion of the non-tab lead-out region 1122b. The second insulating part 142 may separate the burrs on the non-tab lead-out region 1122b from the second electrode plate, thereby reducing the risk of a short circuit.

In some embodiments, the second insulating part 142 completely covers the non-tab lead-out region 1122b. The second insulating part 142 can completely cover the non-tab lead-out region 1122b, thereby wrapping the burrs on the non-tab lead-out region 1122b and reducing the risk of a short circuit.

In some embodiments, the second insulating part 142 is provided with a channel 142a. The first tab 114 passes through the channel 142a, and the second insulating part 142 completely covers the non-tab lead-out region 1122b.

The arrangement of the channel 142a can provide a clearance for the first tab 114, thereby reducing a risk that the insulating member 14 interferes with the first tab 114.

In some embodiments, the second insulating part 142 includes a first extending part 1421 and a second extending part 1422. The first extending part 1421 is arranged on the outer side of the non-tab lead-out region 1122b in the first direction Z, and the second extending part 1422 is arranged on the outer side of the tab lead-out region 1122a in the first direction Z and covers at least a portion of the first tab in the thickness direction Y.

Illustratively, a plane parallel to the first direction Z and passing through the junction of the non-tab lead-out region 1122b and the tab lead-out region 1122a may serve as a dividing surface between the first extending part 1421 and the second extending part 1422.

In the first direction Z, the dimension of the first extending part 1421 may be the same as or different from the dimension of the second extending part 1422.

The second extending part 1422 may support a root part of the first tab 114 close to the tab lead-out region 1122a, so as to reduce a risk that the first tab 114 is reversely inserted between the first electrode plate 11 and the second electrode plate 12 when being bent, thereby reducing the risk of a short circuit and improving the reliability.

Illustratively, in the battery cell 6, in order to save the space occupied by the first tab 114, the first tab 114 may be bent. During the bending process of the first tab 114, a root part thereof may be deformed and be reversely inserted between the first electrode plate 11 and the second electrode plate 12. The second extending part 1422 may support the root part of the first tab 114 close to the tab lead-out region 1122a, thereby reducing a risk that the first tab 114 is reversely inserted between the first electrode plate 11 and the second electrode plate 12 when being bent.

In some embodiments, the first extending part 1421 covers the non-tab lead-out region 1122b in the first direction Z to shield the burrs on the non-tab lead-out region 1122b.

In some embodiments, a dimension D2 of the first extending part 1421 in the first direction Z is equal to a dimension D1 of the second extending part 1422 in the first direction Z.

The second insulating part 142 is provided with a uniform width, which facilitates molding.

In some embodiments, D1 is 2 mm to 10 mm.

Optionally, D1 is 2 mm, 3 mm, 4 mm, 5 mm, 6 mm, 7 mm, 8 mm, 9 mm, or 10 mm.

In the embodiments of the present application, defining D1 as greater than or equal to 2 mm can provide effective support for the first tab 114, thereby reducing a risk that the first tab 114 is reversely inserted between the first electrode plate 11 and the second electrode plate 12, and improving the reliability. In the embodiments of the present application, defining D1 as less than or equal to 10 mm can reduce the volume and weight of the insulating member 14, thereby improving the energy density.

In some embodiments, in the first direction Z, a dimension W3 of a root region of the first tab 114 covered by the second extending part 1422 is greater than or equal to 0.2 times a dimension W4 of the first tab 114, and less than or equal to 0.6 times the dimension W4 of the first tab 114. Illustratively, 0.2 ≤ W3/W4 ≤ 0.6.

Defining W3/W4 as greater than or equal to 0.2 can provide effective support for the first tab 114, thereby reducing a risk that the first tab 114 is reversely inserted between the first electrode plate 11 and the second electrode plate 12, and improving the reliability. In the embodiments of the present application, defining W3/W4 as less than or equal to 0.6 can reduce the volume and weight of the insulating member 14, thereby improving the energy density.

In some embodiments, D1 is equal to W3.

In some embodiments, the first electrode plate 11 and the second electrode plate 12 are wound. Illustratively, the electrode assembly 10 is of a wound structure.

In some embodiments, the first electrode plate 11 includes a plurality of first tabs 114. The plurality of first tabs 114 are spaced apart from each other in a winding direction V of the first electrode plate 11.

In some embodiments, the first extending part 1421 is connected to the second extending part 1422.

In some embodiments, the second insulating part 142 connects adjacent first tabs 114. When the first tab 114 is bent, deformation of root parts of the adjacent first tabs 114 may be limited by the second insulating part 142, thereby reducing a risk that the first tab 114 is reversely inserted between the first electrode plate 11 and the second electrode plate 12, and improving the reliability.

In some embodiments, the second insulating part 142 connects the plurality of first tabs 114.

In some embodiments, the first insulating part 141 is connected to the first active substance layer 113, such that a connection area between the insulating member 14 and the first electrode plate main body 111 can be increased, and a risk that the insulating member 14 falls off can be reduced.

The first insulating part 141 may or may not overlap with the first active substance layer 113 in the thickness direction Y.

In some embodiments, at least a portion of a region of the first insulating part 141 overlaps with the first active substance layer 113 in the thickness direction Y, and is connected to the first active substance layer 113.

In the embodiments of the present application, a connection area between the first insulating part 141 and the first electrode plate main body 111 can be further increased.

In some embodiments, a width of a region in which the first insulating part 141 overlaps with the first active substance layer 113 is W1, where W1 is 0.1 mm to 1 mm.

Optionally, W1 is 0.1 mm, 0.2 mm, 0.3 mm, 0.4 mm, 0.5 mm, 0.6 mm, 0.7 mm, 0.8 mm, 0.9 mm, or 1 mm.

Defining W1 as greater than or equal to 0.1 mm can increase a connection area between the first insulating part 141 and the first active substance layer 113, thereby reducing a risk that the insulating member 14 falls off. Defining W1 as less than or equal to 1 mm can reduce the amount of the insulating member 14 used, reduce the blocking of active ions by the first insulating part 141, and reduce the capacity loss of the battery cell 6.

In some embodiments, the first active substance layer 113 includes a main body region 1131 arranged in the first direction Z and a thinned region 1132 connected to the main body region 1131. The thinned region 1132 is located on the side of the main body region 1131 close to the first end surface 1122 in the first direction Z, and the thickness of at least a portion of the thinned region 1132 is less than the thickness of the main body region 1131. The first insulating part 141 covers at least a portion of the thinned region 1132 in the thickness direction Y.

Illustratively, the end of the thinned region 1132 close to the main body region 1131 is directly connected to the main body region 1131. In some examples, the thickness of the end of the thinned region 1132 close to the main body region 1131 is less than the thickness of the end of the main body region 1131 close to the thinned region 1132, and a step is formed at a joint between the thinned region 1132 and the main body region 1131. In some other examples, the thickness of the end of the thinned region 1132 close to the main body region 1131 is less than the main body region 1131 and equal to the thickness of one end of the thinned region 1132.

Illustratively, the main body region 1131 is generally an equal-thickness structure. The average thickness of the thinned region 1132 is less than the thickness of the main body region 1131.

During the molding process of the first electrode plate 11, the first active substance layer 113 needs to be rolled to increase the compaction density of the first active substance layer 113. In the present application, the arrangement of the thinned region 1132 can reduce the pressure exerted on an edge part of the first active substance layer 113, thereby reducing a risk of cracking of the first current collector main body 112. The first insulating part 141 is disposed in a space on one side of the thinned region 1132 along the thickness direction Y, thereby improving the space utilization rate.

In some embodiments, the thickness of the end of the thinned region 1132 close to the main body region 1131 is equal to the thickness of the end of the main body region 1131 close to the thinned region 1132. The thickness of the thinned region 1132 gradually decreases in a direction away from the main body region 1131. The thickness of the thinned region 1132 changes slowly, thereby reducing a risk that a step is formed on the first active substance layer 113, and reducing stress concentration.

In some embodiments, the first insulating part 141 is spaced apart from the main body region 1131 in the first direction Z, such that the main body region 1131 does not overlap with the first insulating part 141 in the thickness direction Y, thereby improving the space utilization rate.

In addition, in the thickness direction Y, the main body region 1131 does not overlap with the first insulating part 141, which helps prevent the first insulating part 141 from obstructing the transmission of ions between the main body region 1131 and the second electrode plate, thereby reducing the capacity loss of the battery cell.

In some embodiments, in a direction in which the first current collector main body 112 points to the first active substance layer 113, the first insulating part 141 does not exceed a surface of the main body region 1131 facing away from the first current collector main body 112.

In the embodiments of the present application, the additional space occupied by the first insulating part 141 in the thickness direction Y can be reduced, thereby improving the space utilization rate, and reducing a risk that the first insulating part 141 squeezes the second electrode plate 12.

In some embodiments, a thickness t1 of an end part of the thinned region 1132 away from the main body region 1131 is less than or equal to 0.5 times a thickness t2 of the main body region 1131. Illustratively, t1/t2 ≤ 0.5. Optionally, t1/t2 ≤ 1/3.

The end part of the thinned region 1132 away from the main body region 1131 has a relatively small thickness. In this way, a region wrapped by the second insulating part 142 can be reduced, and stress on a joint between the first insulating part 141 and the second insulating part 142 can be reduced, thereby reducing a risk that the insulating member 14 is cracked or falls off.

In some embodiments, the first current collector main body 112 further includes two second end surfaces 1123. The two second end surfaces 1123 are respectively arranged at two ends of the first end surface 1122, and each second end surface 1123 is connected to the two first surfaces 1121.

Optionally, the two second end surfaces 1123 may be respectively located at two ends of the first current collector main body 112 in the winding direction V.

In some embodiments, the insulating member 14 further includes a third insulating part 143. The third insulating part 143 is connected to the first insulating part 141 and the second insulating part 142 and covers a portion of the second end surface 1123.

In the thickness direction Y, the third insulating part 143 does not overlap with the first electrode plate main body 111.

Optionally, the third insulating part 143 may include a first region and a second region disposed along the first direction Z. The first region connects the two first insulating parts 141, and the second region is located on one side of the second insulating part 142 along the winding direction V and is connected to the second insulating part 142. An interface between the second region and the second insulating part 142 may be coplanar with the second end surface 1123.

The third insulating part 143 may cover the burrs on the second end surface 1123, thereby reducing the risk of a short circuit and improving the reliability. The arrangement of the third insulating part 143 can further reduce a risk of exposing the first end surface 1122 due to an assembly error.

In some embodiments, two third insulating parts 143 are provided.

In some embodiments, the electrode assembly 10 further includes a separator 13. The separator 13 is configured to separate the first electrode plate 11 from the second electrode plate 12. The first electrode plate 11, the separator 13 and the second electrode plate 12 are wound. In the winding direction V of the first electrode plate, two ends of the insulating member 14 do not exceed the separator 13.

Illustratively, as shown in FIG. 4, a positive direction of the winding direction V is a counterclockwise direction, and a negative direction of the winding direction V is a clockwise direction. In the positive direction of the winding direction V, the insulating member 14 does not exceed the tail end of the separator 13; and in a negative direction of the winding direction V, the insulating member 14 does not exceed the head end of the separator 13.

The separator 13 may restrain the insulating member 14 to keep the insulating member 14 attached to the first electrode plate main body 111, thereby reducing a risk that the insulating member 14 falls off from the first electrode plate main body 111.

Illustratively, in the positive direction of the winding direction V, the tail end of the separator 13 exceeds one third insulating part 143 of the insulating member 14. In the negative direction of the winding direction V, the head end of the separator 13 exceeds the other third insulating part 143 of the insulating member 14.

The separator 13 may restrain the third insulating part 143 to reduce a risk that the two insulating layers of the third insulating part 143 are separated when the insulating layers are immersed in an electrolyte.

In some embodiments, the insulating member 14 includes two insulating layers 144 formed separately. The insulating layer 144 includes an insulating main body 144a and a connecting part 144b connected to the insulating main body 144a. In the thickness direction Y, the insulating main body 144a overlaps with the first electrode plate main body 111, and the connecting part 144b does not overlap with the first electrode plate main body 111. The insulating main bodies 144a of the two insulating layers 144 respectively form the two first insulating parts 141; the connecting parts 144b of the two insulating layers 144 are connected in a stacked manner to form the second insulating part 142.

Optionally, the connecting parts 144b of the two insulating layers 144 further form third insulating parts 143.

The two insulating layers 144 may be attached to the first electrode plate main body 111 from two sides, forming the insulating member 14. In the embodiments of the present application, an assembly process can be simplified.

In some embodiments, t1/t2 ≤ 0.5. The end part of the thinned region 1132 away from the main body region 1131 has a relatively small thickness. In the process of attaching the insulating layer 144, a degree of bending of the insulating layer 144 at the end part of the thinned region 1132 away from the main body region 1131 is relatively small. This helps reduce a risk that a gap is generated between the two insulating layers 144, thereby improving the connection strength between the two insulating layers 144.

In some embodiments, the thickness of the insulating layer 144 is 7 µm to 30 µm. Optionally, the thickness of the insulating layer 144 is 4 µm, 9 µm, 10 µm, 11 µm, 12 µm, 13 µm, 14 µm, 15 µm, 20 µm, 25 µm, or 30 µm.

Defining the thickness of the insulating layer 144 as greater than or equal to 7 µm can reduce a risk that the insulating layer 144 is pierced by burrs, thereby improving the reliability. Defining the thickness of the insulating layer 144 as less than or equal to 30 µm can reduce the space and weight occupied by the insulating layer 144, thereby reducing the loss in energy density of the battery cell 6.

In some embodiments, a difference between the thickness of the insulating layer 144 and a thickness of the first current collector main body 112 has an insulation value not greater than 10 µm.

Illustratively, the thickness of the insulating layer 144 is t3, and the thickness of the first current collector main body 112 is t4, where |t3-t4| ≤ 10 µm.

The larger t3 indicates that the insulating layer 144 is less likely to be pierced by burrs. Correspondingly, the insulating layer 144 occupies a larger space and has a larger weight. The larger t4 indicates a stronger overcurrent capability of the first current collector main body 112. However, the more severe the burrs generated by the first current collector main body 112 are, the more easily the burrs pierce the insulating layer 144.

In the embodiments of the present application, a difference between the thickness of the insulating layer 144 and the thickness of the first current collector main body 112 has an insulation value not greater than 10 µm. On the premise that an overcurrent of the first current collector main body 112 meets requirements, a risk that the insulating layer 144 is pierced by burrs is reduced, and the weight and space occupied by the insulating layer 144 are reduced, thereby improving the energy density.

In some embodiments, a difference between the thickness of the insulating layer 144 and the thickness of the first current collector main body 112 has an insulation value not greater than 5 µm, thereby further reducing the difference between the thickness of the insulating layer 144 and the thickness of the first current collector main body 112.

In some embodiments, |t3-t4| ≤ 1 µm, further reducing the difference between the thickness of the insulating layer 144 and the thickness of the first current collector main body 112.

In some embodiments, the first end surface 1122 includes a tab lead-out region 1122a and a non-tab lead-out region 1122b. The first tab 114 extends from only the tab lead-out region 1122a, and protrudes from the second insulating part 142 in a direction away from the first current collector main body 112. Non-overlapping portions of the two connecting parts 144b and the first tab 114 are directly connected to form the first extending part 1421, and the first extending part 1421 covers the non-tab lead-out region 1122b in the first direction Z. Overlapping portions of the two connecting parts 144b and the first tab 114 form the second extending part 1422, and cover at least a portion of the first tab in the thickness direction Y.

The first extending part 1421 can cover the non-tab lead-out region 1122b to shield burrs on the non-tab lead-out region 1122b and reduce the risk of a short circuit.

In some embodiments, the dimension of the first extending part 1421 in the first direction Z is equal to the dimension of the second extending part 1422 in the first direction Z.

In some embodiments, a dimension of an overlapping portion of the connecting part 144b and the first tab 114 in the first direction Z is D3, and a dimension of a non-overlapping portion of the connecting part 144b and the first tab 114 in the first direction Z protruding from the non-tab lead-out region 1122b is D4, where D3 is equal to D4.

Illustratively, D3 is equal to D1, and D4 is equal to D2.

A region in which the two connecting parts 144b are directly connected has a relatively large dimension along the first direction Z, thereby improving the connection strength between the two connecting parts 144b and improving the reliability of the connecting parts 144b covering the non-tab lead-out region 1122b.

In some embodiments, the insulating layer 144 is rectangular in the flattened state.

In some embodiments, a width of the insulating layer 144 in the first direction Z is 5 mm to 20 mm. Optionally, the width of the insulating layer 144 is 5 mm, 6 mm, 8 mm, 10 mm, 12 mm, 15 mm, 18 mm, or 20 mm.

In some embodiments, the first current collector main body 112 includes two first end surfaces 1122 oppositely arranged in the first direction Z. The first direction Z is perpendicular to a thickness direction Y of the first electrode plate main body 111. The electrode assembly 10 includes two insulating members 14. The two insulating members 14 are respectively arranged on the outer sides of the two first end surfaces 1122.

The two insulating members 14 may separate the burrs on the two first end surfaces 1122 from the second electrode plate, thereby further reducing the risk of a short circuit.

In some embodiments, the second electrode plate 12 includes a second electrode plate main body 121. The second electrode plate main body 121 and the first electrode plate main body 111 are arranged in a stacked manner. The second electrode plate main body 121 includes a second current collector main body 122 and a second active substance layer 123. The second current collector main body 122 includes two second surfaces 1221 arranged opposite to each other and a third end surface 1222 connecting the two second surfaces 1221. The second active substance layer 123 is arranged on the second surface 1221.

In some examples, the second electrode plate 12 is a positive electrode plate, the positive electrode current collector may include a second current collector main body 122, and the second active substance layer 123 is a positive electrode active substance layer. In some other examples, the second electrode plate 12 is a negative electrode plate, the negative electrode current collector includes a second current collector main body 122, and the second active substance layer 123 is a negative electrode active substance layer.

In the embodiments of the present application, a second active substance layer 123 may be arranged on one second surface 1221, or second active substance layers 123 may be arranged on two second surfaces 1221.

In some embodiments, the first end surface 1122 is located at one end of the first current collector main body 112 in the first direction Z, and the third end surface 1222 is located at one end of the second current collector main body 122 in the first direction Z. In the thickness direction Y, the insulating member 14 separates the third end surface 1222 from the first electrode plate 11.

Illustratively, two first end surfaces 1122 are provided, and two third end surfaces 1222 are provided. One insulating member 14 separates one third end surface 1222 close to one first end surface 1122 from the first electrode plate 11, and the other insulating member 14 separates the other third end surface 1222 close to the other first end surface 1122 from the first electrode plate 11.

In the embodiments of the present application, the first insulating part 141 may separate the third end surface 1222 from the first electrode plate 11, or the second insulating part 142 may separate the third end surface 1222 from the first electrode plate 11.

The insulating member 14 can also separate the burrs on the third end surface 1222 from the first electrode plate 11, thereby reducing the risk of conduction between the burrs on the third end surface 1222 and the first electrode plate 11, reducing the possibility of thermal runaway caused by a short circuit, and improving the reliability of the battery cell 6.

In some embodiments, the first electrode plate 11 is a positive electrode plate, and the second electrode plate 12 is a negative electrode plate. Two ends of the second active substance layer 123 exceed the first electrode plate main body 111 in the first direction Z.

The insulating member 14 shields at least a portion of the first end surface 1122. Even if the second active substance layer 123 overlaps with the first end surface 1122 in the stacking direction, the second active substance layer is not easily in contact with the burrs on the first end surface 1122. The second active substance layer 123 may provide more embedding sites for active ions separated from the first active substance layer 113, thereby reducing the risk of active ion precipitation, improving the cycle performance of the battery cell 6, and improving the reliability.

In some embodiments, the electrode assembly 10 further includes a separator 13. The separator 13 is configured to separate the first electrode plate main body 111 from the second electrode plate 12. In the first direction Z, the end of the second insulating part 142 away from the first insulating part 141 does not exceed the separator 13.

In the embodiments of the present application, the amount of the second insulating part 142 used can be reduced, the weight and space occupied by the second insulating part 142 can be reduced, and the energy density can be improved.

In some embodiments, the insulating member 14 has a melting point of 95 °C to 150 °C.

Optionally, the insulating member 14 has a melting point of 95 °C, 100 °C, 110 °C, 120 °C, 130 °C, 140 °C, 145 °C, or 150 °C.

During the charging and discharging process of the battery cell 6, the first current collector main body 112 generates heat. The insulating member 14 has a relatively high melting point, reducing a risk that the insulating member 14 softens and falls off due to heat, and improving the reliability.

In some embodiments, the insulating member 14 includes an adhesive, and the adhesive includes at least one of ethylene and a copolymer thereof, a polyolefin, a polyester, a polyurethane, a polyamide, styrene, and a block copolymer thereof.

The adhesive has relatively high adhesive strength, and is not easy to fall off from the first electrode plate main body 111.

Optionally, the adhesive may be a hot-melt adhesive. The insulating member 14 may be a hot-melt adhesive film.

Optionally, during the production process of the first electrode plate 11, the first electrode plate 11 may be directly coated with the adhesive, and the adhesive is cured to form the insulating member 14.

In some embodiments, the insulating member 14 has an elastic modulus of 500 MPa to 3000 MPa.

In some examples, the insulating member 14 is of a one-piece structure, and the insulating member 14 has an elastic modulus of 500 MPa to 3000 MPa. In some other examples, the insulating member 14 includes two insulating layers 144, and the elastic modulus of the insulating member 14 refers to the elastic modulus of the insulating layers 144.

As an example, the elastic modulus of the insulating member 14 may be 500 Mpa, 600 Mpa, 700 Mpa, 770 Mpa, 800 Mpa, 900 Mpa, 1000 Mpa, 1200 Mpa, 1300 Mpa, 1320 Mpa, 1400 Mpa, 1500 Mpa, 1800 Mpa, 2000 Mpa, 2200 Mpa, 2500 Mpa, 2600 Mpa, 2800 Mpa, or 3000 Mpa.

The insulating member 14 has a relatively high elastic modulus, and may provide support for the first tab 114, thereby reducing a risk that the root part of the first tab 114 is reversely inserted between the first electrode plate 11 and the second electrode plate 12, and improving the reliability.

As an example, the elastic modulus of the insulating member 14 may be measured with reference to the national standard GBT 22315-2008, Metallic Materials - Determination of Modulus of Elasticity and Poisson's Ratio.

In some embodiments, the insulating member 14 has an elastic modulus of 770 Mpa to 1320 Mpa.

In some embodiments, the insulating member 14 has a tensile strength of 949 kgf/cm² to 1363 kgf/cm². Optionally, the insulating member 14 has a tensile strength of 949 kgf/cm², 1000 kgf/cm², 1050 kgf/cm², 1100 kgf/cm², 1150 kgf/cm², 1200 kgf/cm², 1250 kgf/cm², 1300 kgf/cm², or 1363 kgf/cm².

The insulating member 14 has relatively high tensile strength, and the insulating member 14 is not easily deformed when being pulled by the first tab 114. Correspondingly, the insulating member 14 can effectively limit deformation of the first tab 114, thereby reducing a risk that the root part of the first tab 114 is reversely inserted between the first electrode plate 11 and the second electrode plate 12, and improving the reliability.

As an example, the tensile strength of the insulating member 14 may be measured with reference to the national standard GB/T 228-2002, Metallic Materials - Tensile Testing at Ambient Temperature.

In some embodiments, the insulating member 14 is connected to the first active substance layer 113. The peel strength between the insulating member 14 and the first active substance layer 113 is higher than the peel strength between the first active substance layer 113 and the first surface 1121.

As an example, the insulating member 14 may be fixed to a tensile tester such that the insulating member 14 can be pulled at 180°. During the pulling process, the first active substance layer 113 is peeled off from the first surface 1121, and the insulating member 14 remains connected to the first active substance layer 113.

As an example, the peel strength may be measured with reference to GB/T 2792-2014, Measurement of Peel Adhesion Properties for Adhesive Tapes.

In the embodiments of the present application, the peel strength between the insulating member 14 and the first active substance layer 113 is relatively high, thereby reducing a risk that the insulating member 14 falls off, and improving the reliability.

In some embodiments, the battery cell 6 includes an electrolytic solution contained in the housing 20. The insulating member 14 is stable in the electrolytic solution.

Illustratively, after the insulating member 14 is soaked in the electrolytic solution for 1000 hours, the peel strength between the insulating member and the first active substance layer 113 is greater than or equal to 2 N/m. Optionally, after the insulating member 14 is soaked in the electrolytic solution for 1000 hours, the peel strength between the insulating member and the first active substance layer 113 is 15 N/m to 200 N/m.

In some embodiments, the insulating member 14 has good insulating properties, the insulating member 14 does not undergo breakdown at a voltage of 200 V, and the resistance of the insulating member 14 is greater than or equal to 9999 MΩ.

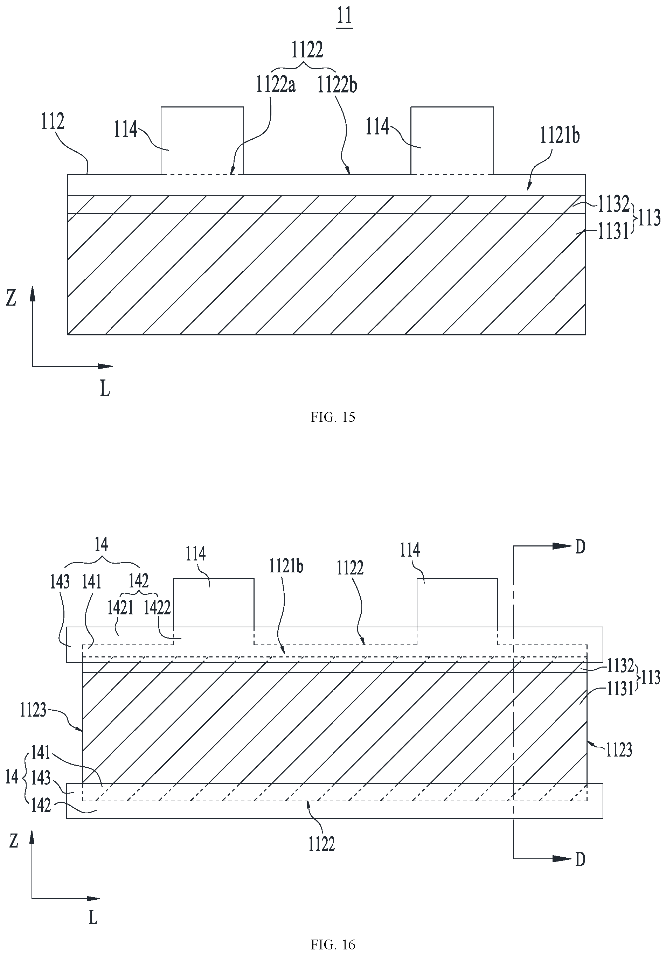

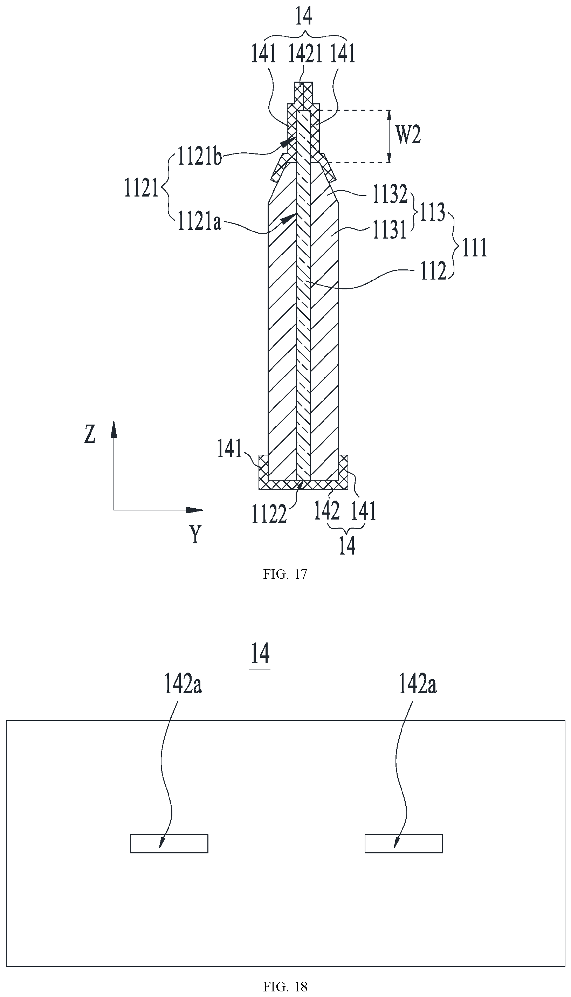

FIG. 15 is a schematic diagram of a first electrode plate of an electrode assembly in an unfolded state according to some other embodiments of the present application, where a tab lead-out region is blocked by a first tab, as shown by a dashed line in FIG. 15; FIG. 16 is a schematic diagram of the first electrode plate shown in FIG. 15 after being connected to an insulating member, where a portion of the first electrode plate covered by the insulating member is shown by a dashed line; and FIG. 17 is a schematic cross-sectional view taken along a D-D direction in FIG. 16.

Referring to FIGs. 15 to 17, in some embodiments, the first surface 1121 includes a coated region 1121a and an uncoated region 1121b that are arranged in the first direction Z. One end of the uncoated region 1121b is connected to the first end surface 1122, and the other end thereof is connected to the coated region 1121a. The coated region 1121a is coated with the first active substance layer 113, and the uncoated region 1121b is not coated with the first active substance layer 113. The first insulating part 141 is connected to the uncoated region 1121b.

The arrangement of the uncoated region 1121b can increase a connection area between the first current collector main body 112 and the insulating member 14, and reduce a risk that the insulating member 14 falls off, thereby improving the reliability. The first end surface 1122 and the first active substance layer 113 are spaced apart from each other in the first direction Z. In this way, a risk of cutting into the first active substance layer 113 can be reduced during the cutting process of the first electrode plate 11, thereby reducing a waste of active substances.

In some embodiments, the first current collector main body 112 includes two first end surfaces 1122. One end of the uncoated region 1121b away from the coated region 1121a is connected to one first end surface 1122, and one end of the coated region 1121a away from the uncoated region 1121b is connected to the other first end surface 1122. The first insulating part 141 of one insulating member 14 is connected to the uncoated region 1121b, and the first insulating part 141 of the other insulating member 14 is connected to the coated region 1121a.

In some embodiments, the first insulating part 141 completely covers the uncoated region 1121b to reduce the possibility of conduction between the uncoated region 1121b and the second electrode plate 12, thereby reducing the risk of a short circuit and improving the reliability.

In some embodiments, a difference between the thickness of the insulating layer 144 and the thickness of the first current collector main body 112 has an absolute value less than or equal to 10 µm. That is, |t3-t4| ≤ 10 µm.

When the insulating layer 144 is bent at the junction between the uncoated region 1121b and the first end surface 1122, the insulating layer 144 is not easily pierced by the junction between the uncoated region 1121b and the first end surface 1122, and the insulating layer 144 is more easily attached to the first end surface 1122.

In the first direction Z, a dimension of a region of the insulating member 14 covering the uncoated region 1121b is greater than or equal to 1 mm, thereby increasing the connection strength between the insulating member 14 and the uncoated region 1121b and reducing a risk that the insulating member 14 falls off from the first electrode plate 11.

Illustratively, in the first direction Z, a dimension of a region of the insulating member 14 covering the uncoated region 1121b is W2. Optionally, W2 is 1 mm, 1.5 mm, 2 mm, 2.5 mm, 3 mm, 3.5 mm, 4 mm, 4.5 mm, or 5 mm.

In some embodiments, W2 is less than or equal to 5 mm. Defining W2 as less than or equal to 5 mm can reduce the weight and space occupied by the insulating member 14, lower the requirement for the dimension of the uncoated region 1121b, increase the area of the coated region 1121a, and increase the energy density of the battery cell 6.

In some embodiments, the first electrode plate 11 further includes a first tab 114. The first tab 114 extends outward from the first end surface 1122 in the first direction Z and passes through the second insulating part 142.

In some embodiments, the first current collector main body 112 is provided with two first end surfaces 1122, and the first tab 114 extends from one first end surface 1122. The electrode assembly 10 includes two insulating members 14, and the two insulating members 14 respectively wrap the two first end surfaces 1122.

Illustratively, for the insulating member 14 attached to the first end surface 1122 from which the first tab 114 is led out, a dimension of a region in which the insulating member 14 overlaps with the first active substance layer 113 in the first direction Z is 0.5 mm, a dimension of a region in which the insulating member 14 overlaps with the uncoated region 1121b in the first direction Z is 3 mm, and the dimension of the second insulating part 142 in the first direction Z is 4.5 mm.

For the insulating member 14 attached to the first end surface 1122 from which the first tab 114 is not led out, a dimension of a region in which the insulating member 14 overlaps with the first active substance layer 113 in the first direction Z is 0.5 mm, and the dimension of the second insulating part 142 in the first direction Z is 1.5 mm.

FIG. 18 is a schematic diagram of an insulating member before being assembled to a first electrode plate according to some embodiments of the present application.

Referring to FIG. 18, in some embodiments, the insulating member 14 is of an integrally formed structure, thereby enhancing the stability of a connection between the insulating member 14 and the first electrode plate main body 111.

In some embodiments, the insulating member 14 is provided with a channel 142a through which the first tab 114 passes.

Illustratively, before the first electrode plate 11 and the insulating member 14 are assembled, the insulating member 14 may be of a flat-plate structure. The first tab 114 may be first allowed to face the channel 142a of the insulating member 14, and the first tab 114 may be allowed to pass through the channel 142a. After the insulating member 14 abuts against the first end surface 1122, the insulating member 14 is folded, such that the insulating member 14 is attached to the first electrode plate main body 111.

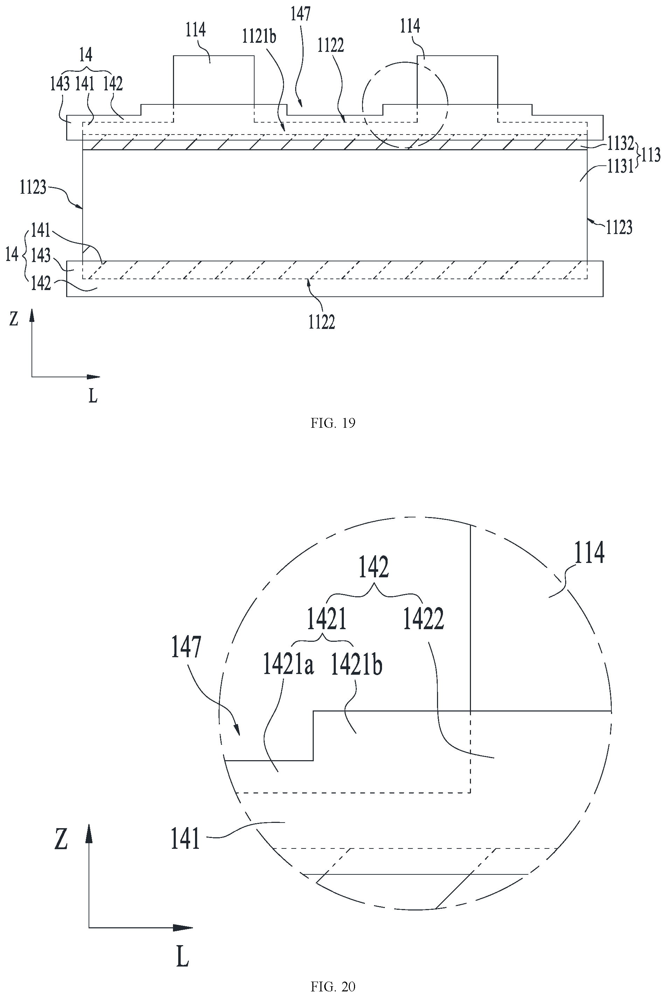

FIG. 19 is a schematic diagram of a first electrode plate and an insulating member of an electrode assembly in an unfolded state according to still other embodiments of the present application, where a portion of the first electrode plate covered by the insulating member is shown by a dashed line; FIG. 20 is an enlarged schematic view of a circled portion in FIG. 19.

Referring to FIGs. 19 and 20, in some embodiments, the first extending part 1421 is provided with a first portion 1421a and a second portion 1421b. The second portion 1421b is connected to the second extending part 1422, the dimension of the second portion 1421b in the first direction Z is equal to the dimension of the second extending part 1422 in the first direction Z, the first portion 1421a is configured to be formed by providing a recess 147 on the second insulating part 142, and the dimension of the first portion 1421a in the first direction Z is smaller than the dimension of the second extending part 1422 in the first direction Z.

The arrangement of the recess 147 can reduce the dimension of the first portion 1421a in the first direction Z, thereby reducing the amount of the insulating member 14 used and increasing the energy density of the battery cell.

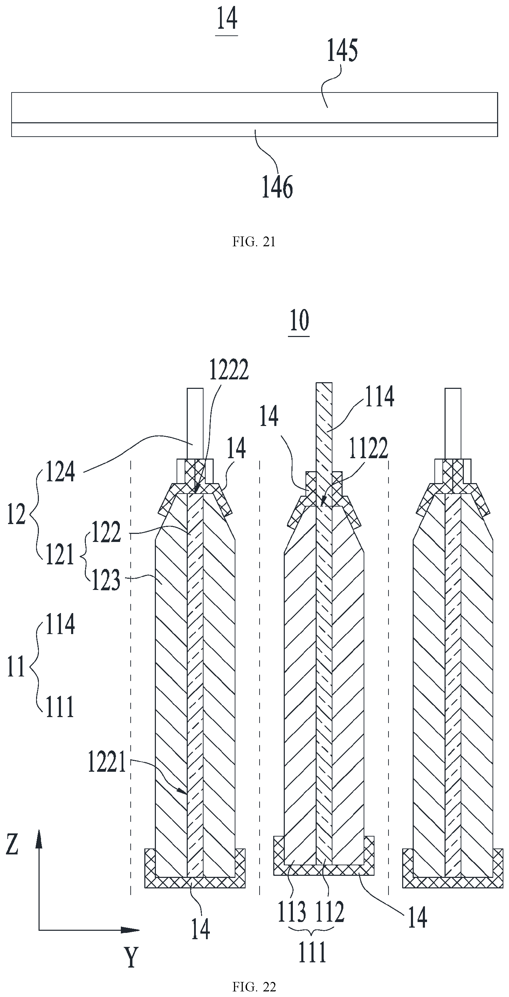

FIG. 21 is a schematic structural diagram of an insulating member of an electrode assembly according to some embodiments of the present application.

Referring to FIG. 21, in some embodiments, the insulating member 14 includes a substrate layer 145 and an adhesive layer 146. The substrate layer 145 is connected to the first electrode plate main body 111 by the adhesive layer 146.

The substrate layer 145 can enhance the strength of the insulating member 14 and reduce the deformation of the insulating member 14 during the attachment process. The adhesive layer 146 can adhere the substrate layer 145 to the first electrode plate main body 111, thereby reducing a risk that the substrate layer 145 falls off from the first electrode plate main body 111.

In some embodiments, the substrate layer 145 includes at least one of polyethylene terephthalate (PET), polypropylene, polyethylene, and block copolymers thereof.

In some embodiments, the adhesive layer 146 includes at least one of polyacrylate, styrene-butadiene rubber, polyisobutylene, or butyl rubber.

In some embodiments, the insulating member 14 includes two insulating layers 144, and each insulating layer 144 includes a substrate layer 145 and an adhesive layer 146. The adhesive layers 146 of the two insulating layers 144 are adhered. Optionally, the insulating layer 144 is a pressure-sensitive adhesive tape.

In some embodiments, an elastic modulus of the substrate layer 145 is greater than an elastic modulus of the adhesive layer 146.

FIG. 22 is a schematic partial cross-sectional view of an electrode assembly according to some other embodiments of the present application.

Referring to FIG. 22, in some embodiments, the third end surface 1222 of the second electrode plate 12 is also wrapped with the insulating member 14. Illustratively, the insulating member 14 wrapping the third end surface 1222 and the insulating member 14 wrapping the first end surface 1122 may have a similar structure.

In some embodiments, the second electrode plate 12 includes a second tab 124 led out from one third end surface 1222.

In some embodiments, the electrode assembly 10 includes two insulating members 14 respectively attached to the two third end surfaces 1222.

Illustratively, for the insulating member 14 attached to the third end surface 1222 from which the second tab 124 is led out, a total dimension of the insulating member 14 in the first direction Z is 5 mm, and the dimension of a region in which the insulating member 14 overlaps with the second active substance layer 123 in the first direction Z is 0.5 mm.

For the insulating member 14 attached to the third end surface 1222 from which the second tab 124 is not led out, a total dimension of the insulating member 14 in the first direction Z is 2 mm, and the dimension of a region in which the insulating member 14 overlaps with the second active substance layer 123 in the first direction Z is 0.5 mm.

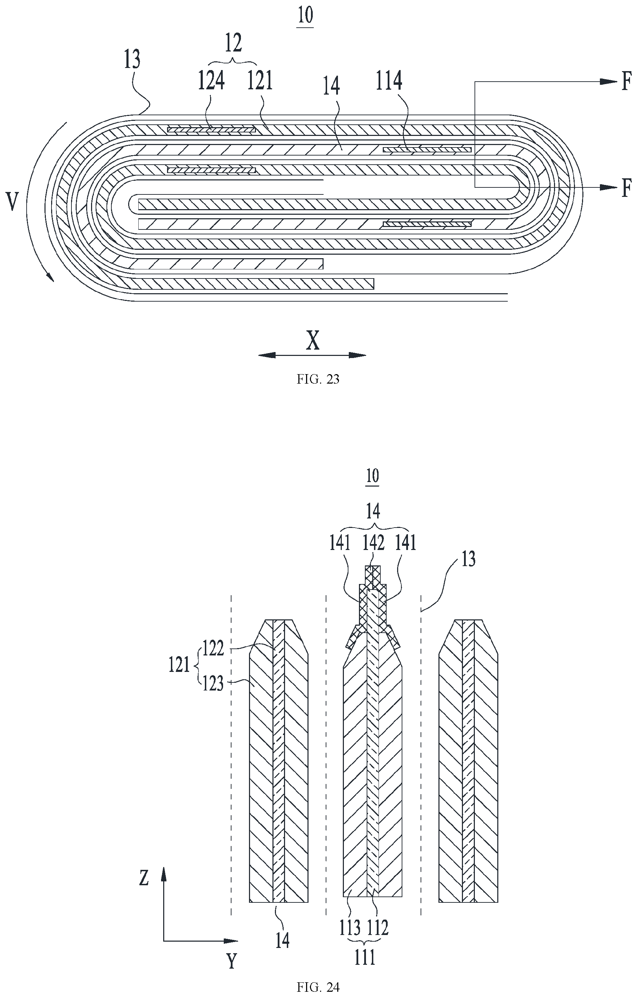

FIG. 23 is a schematic top view of an electrode assembly according to still other embodiments of the present application; and FIG. 24 is a schematic cross-sectional view taken along an F-F direction in FIG. 23.

Referring to FIGs. 23 and 24, in some embodiments, the electrode assembly 10 further includes a separator 13. The separator 13 is configured to separate the first electrode plate 11 from the second electrode plate 12. In the first direction Z, the end of the second insulating part 142 away from the first insulating part 141 exceeds the separator 13.

The second insulating part 142 protrudes from the separator 13. When the first tab 114 is bent, the second insulating part 142 may limit the first tab 114, so as to reduce a risk that the first tab 114 squeezes the separator 13, reduce folds of the separator 13, reduce a risk that the separator 13 shrinks inward, and improve the reliability.

In some embodiments, the end of the first current collector main body 112 in the first direction Z exceeds the second electrode plate main body 121.

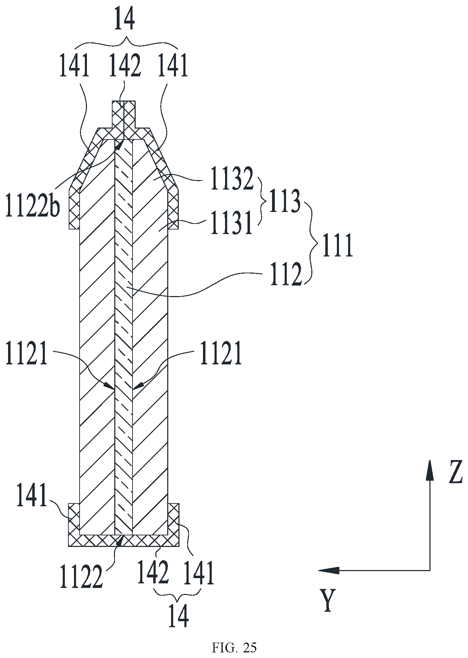

FIG. 25 is a schematic cross-sectional view of a first electrode plate and an insulating member of an electrode assembly according to still other embodiments of the present application.

Referring to FIG. 25, in some embodiments, the first insulating part 141 covers a portion of the main body region 1131. The first insulating part 141 is connected to both the main body region 1131 and the thinned region 1132, thereby increasing a connection area between the insulating member 14 and the first electrode plate main body 111, and reducing a risk that the insulating member 14 falls off.

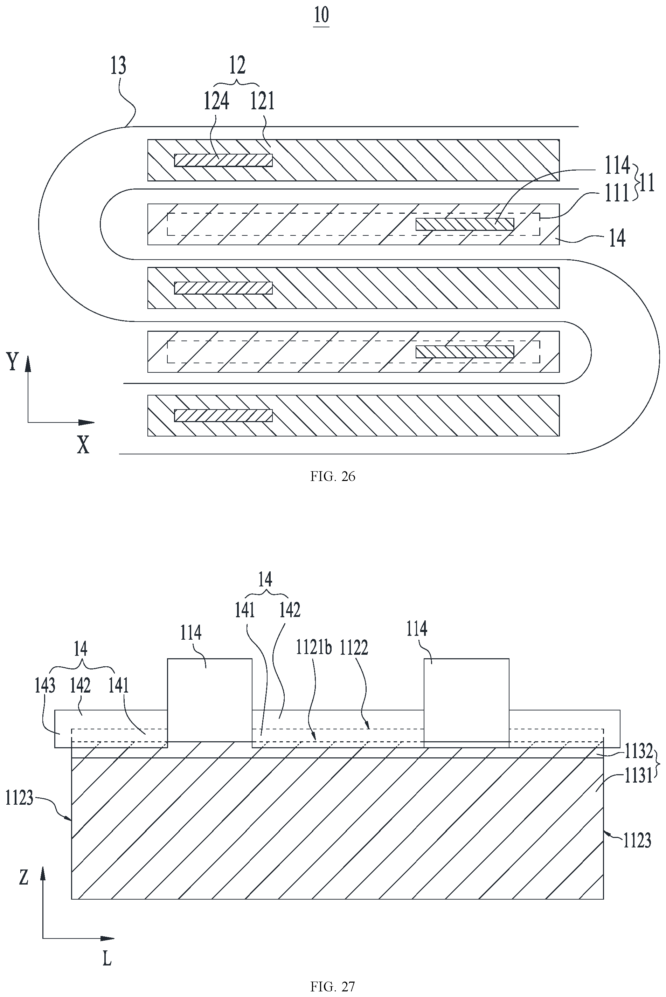

FIG. 26 is a schematic diagram of an electrode assembly according to still other embodiments of the present application. In FIG. 26, the first electrode plate main body 111 is shown by dashed lines.

Referring to FIG. 26, in some embodiments, the first electrode plate main body 111 is in a flat-plate shape. In a second direction X, two ends of the insulating member 14 do not exceed the separator 13. The second direction X is perpendicular to the first direction Z and the thickness direction Y.

Optionally, the second direction X may be the width direction of the first electrode plate main body 111, and the first direction Z may be the length direction of the first electrode plate main body 111.

Optionally, the electrode assembly 10 is of a stacked structure. The electrode assembly 10 includes a plurality of first electrode plates 11. The plurality of first electrode plates 11 are arranged in a stacked manner. An insulating member 14 is arranged on each first electrode plate 11.

One or a plurality of second electrode plates 12 may be provided. For example, the second electrode plate 12 is folded to form a plurality of folded segments arranged in a stacked manner, with one first electrode plate 11 arranged between adjacent folded segments.

The separator 13 may restrain the insulating member 14 to keep the insulating member 14 attached to the first electrode plate main body 111, thereby reducing a risk that the insulating member 14 falls off from the first electrode plate main body 111.

FIG. 27 is a schematic diagram of a first electrode plate and an insulating member of an electrode assembly in an unfolded state according to still other embodiments of the present application.

Referring to FIG. 27, in some embodiments, the second insulating part 142 is only arranged on the outer side of the non-tab lead-out region 1122b in the first direction Z. In the embodiments of the present application, the amount of the insulating member 14 used can be reduced.

Illustratively, a plurality of second insulating parts 142 are provided, the plurality of second insulating parts 142 are spaced apart from each other, and each second insulating part 142 covers one non-tab lead-out region 1122b.

According to some embodiments of the present application, the present application further provides a battery cell 6, which includes a housing 20 and the electrode assembly 10 according to any one of the above embodiments. The electrode assembly 10 is accommodated in the housing 20.

According to some embodiments of the present application, the present application further provides a battery. The battery includes a plurality of battery cells according to any one of the above embodiments.

According to some embodiments of the present application, the present application further provides an electric device. The electric device includes the battery cell according to any one of the above embodiments. The battery cell is configured to provide electric energy for the electric device. The electric device may be any one of the aforementioned devices or systems that use the battery cell.

According to some embodiments of the present application, referring to FIGs. 4 to 14, an embodiment of the present application provides an electrode assembly 10, which includes a first electrode plate 11, a second electrode plate 12, a separator 13 and an insulating member 14. The first electrode plate 11 and the second electrode plate 12 have opposite polarities. The first electrode plate 11, the second electrode plate 12, and the separator 13 are wound in a winding direction V to form a wound structure.

The first electrode plate 11 includes a first electrode plate main body 111 and a first tab 114. The first electrode plate main body 111 includes a first current collector main body 112 and a first active substance layer 113. The first current collector main body 112 includes two first surfaces 1121, two first end surfaces 1122, and two second end surfaces 1123. The two first surfaces 1121 are oppositely arranged in a thickness direction Y of the first electrode plate main body 111. The two first end surfaces 1122 are respectively located at two ends of the first current collector main body 112 in a first direction Z, and the two second surfaces 1221 are respectively located at two ends of the first current collector main body 112 in the winding direction V. The first direction Z is perpendicular to the winding direction V, and the first direction Z is perpendicular to the thickness direction Y. Each first end surface 1122 is connected to the two first surfaces 1121, and each second end surface 1123 is connected to the two first surfaces 1121.

The first surface 1121 includes a coated region 1121a and an uncoated region 1121b that are disposed in the first direction Z. The first active substance layer 113 is arranged in the coated region 1121a, and the uncoated region 1121b is not provided with the first active substance layer 113. One end of the uncoated region 1121b away from the coated region 1121a is connected to one first end surface 1122, and one end of the coated region 1121a away from the uncoated region 1121b is connected to the other first end surface 1122.

The plurality of first tabs 114 extend from the same first end surface 1122 and are connected to the uncoated region 1121b, and the plurality of first tabs 114 are spaced apart from each other in the winding direction V. The plurality of first tabs 114 are integrally formed with the first current collector main body 112.

One insulating member 14 is configured to wrap the first end surface 1122 from which the first tab 114 is led out. Specifically, one insulating member 14 is connected to the first active substance layer 113 and wraps the uncoated region 1121b, the first end surface 1122, and the end part of the second end surface 1123 close to the first end surface 1122. The first tab 114 passes through the insulating member 14.

The other insulating member 14 is configured to wrap the first end surface 1122 from which the first tab 114 is not led out. Specifically, the other insulating member 14 is connected to the first active substance layer 113 and wraps the first end surface 1122 and the end part of the second end surface 1123 close to the first end surface 1122.

The insulating member 14 includes two insulating layers 144. The two insulating layers 144 are attached to the first electrode plate 11 from two sides, forming the insulating member 14. The insulating layer 144 may be a hot-melt adhesive film or a pressure-sensitive adhesive tape.

It should be noted that, unless conflicting, the embodiments and features of the embodiments in the present application may be combined with each other.

Finally, it should be noted that the above embodiments are only used to illustrate the technical solutions of the present application, but not to limit them. Although the present application has been described in detail with reference to the foregoing embodiments, those of ordinary skill in the art should understand that they can still modify the technical solutions recorded in the foregoing embodiments or make equivalent substitutions for some of the technical features; however, these modifications or substitutions do not make the essence of the corresponding technical solutions deviate from the spirit and scope of the technical solutions in the embodiments of the present application.

## Claims

1. An electrode assembly, comprising a first electrode plate and a second electrode plate having opposite polarities, wherein
the first electrode plate comprises a first electrode plate main body, and the first electrode plate main body comprises a first current collector main body and a first active substance layer, the first current collector main body comprising two first surfaces arranged opposite to each other in a thickness direction thereof and a first end surface connecting the two first surfaces, and the first active substance layer being arranged on the first surface;
the electrode assembly further comprises an insulating member connected to the first electrode plate main body, and at least a portion of the insulating member is arranged on an outer side of the first end surface in a first direction, the first direction being perpendicular to the thickness direction.

2. The electrode assembly according to claim 1, wherein the insulating member comprises two first insulating parts and a second insulating part, wherein
the two first insulating parts are respectively located on two sides of the first electrode plate main body in the thickness direction and connected to the first electrode plate main body;
the second insulating part connects the two first insulating parts, and is arranged on the outer side of the first end surface in the first direction.

3. The electrode assembly according to claim 2, wherein the second insulating part covers at least a portion of the first end surface.

4. The electrode assembly according to claim 2 or 3, wherein the first electrode plate further comprises a first tab connected to the first current collector main body, and the first end surface comprises a tab lead-out region and a non-tab lead-out region, the first tab being only led out from the tab lead-out region, and protruding from the second insulating part in the first direction toward a direction away from the first current collector main body.

5. The electrode assembly according to claim 4, wherein the second insulating part covers at least a portion of the non-tab lead-out region.

6. The electrode assembly according to claim 5, wherein the second insulating part is arranged only on an outer side of the non-tab lead-out region in the first direction.

7. The electrode assembly according to claim 5, wherein the second insulating part comprises a first extending part and a second extending part, the first extending part being arranged on an outer side of the non-tab lead-out region in the first direction, and the second extending part being arranged on an outer side of the tab lead-out region in the first direction and covering at least a portion of the tab in the thickness direction.

8. The electrode assembly according to claim 7, wherein the first extending part covers the non-tab lead-out region in the first direction.

9. The electrode assembly according to claim 8, wherein a dimension of the first extending part in the first direction is equal to a dimension of the second extending part in the first direction.

10. The electrode assembly according to claim 8, wherein the first extending part is provided with a first portion and a second portion; the second portion is connected to the second extending part, a dimension of the second portion in the first direction is equal to a dimension of the second extending part in the first direction, the first portion is configured to be formed by providing a recess on the second insulating part, and a dimension of the first portion in the first direction is smaller than the dimension of the second extending part in the first direction.

11. The electrode assembly according to any one of claims 7 to 10, wherein in the first direction, a dimension of a root region of the first tab covered by the second extending part is greater than or equal to 0.2 times a dimension of the first tab, and less than or equal to 0.6 times the dimension of the first tab.

12. The electrode assembly according to any one of claims 2 to 11, wherein the first insulating part is connected to the first active substance layer.

13. The electrode assembly according to claim 12, wherein at least a portion of a region of the first insulating part overlaps with the first active substance layer in the thickness direction and is connected to the first active substance layer.

14. The electrode assembly according to claim 12 or 13, wherein
the first active substance layer comprises a main body region arranged in the first direction and a thinned region connected to the main body region, the thinned region being located on a side of the main body region close to the first end surface in the first direction, and a thickness of at least a portion of the thinned region being less than a thickness of the main body region;
the first insulating part covers at least a portion of the thinned region in the thickness direction.

15. The electrode assembly according to claim 14, wherein in a direction in which the first current collector main body points to the first active substance layer, the first insulating part does not exceed a surface of the main body region facing away from the first current collector main body.

16. The electrode assembly according to claim 14 or 15, wherein the first insulating part is spaced apart from the main body region in the first direction.

17. The electrode assembly according to claim 14, wherein the first insulating part covers a portion of the main body region.

18. The electrode assembly according to any one of claims 14 to 17, wherein a thickness t1 of an end part of the thinned region away from the main body region is less than or equal to 0.5 times a thickness t2 of the main body region.

19. The electrode assembly according to any one of claims 2 to 18, wherein
the first surface comprises a coated region and an uncoated region arranged in the first direction; one end of the uncoated region is connected to the first end surface, the other end of the uncoated region is connected to the coated region, the coated region is coated with the first active substance layer, and the uncoated region is not coated with the first active substance layer;
the first insulating part is connected to the uncoated region.

20. The electrode assembly according to claim 19, wherein the first insulating part completely covers the uncoated region.

21. The electrode assembly according to claim 19 or 20, wherein in the first direction, a dimension of a region of the insulating member covering the uncoated region is greater than or equal to 1 mm.

22. The electrode assembly according to any one of claims 19 to 21, wherein the first electrode plate further comprises a first tab, the first tab extending outward from the first end surface in the first direction and passing through the second insulating part.

23. The electrode assembly according to any one of claims 2 to 22, wherein the insulating member comprises two insulating layers formed separately, and each insulating layer comprises an insulating main body and a connecting part connected to the insulating main body; in the thickness direction, the insulating main body overlaps with the first electrode plate main body, and the connecting part does not overlap with the first electrode plate main body;
the insulating main bodies of the two insulating layers respectively form the two first insulating parts; the connecting parts of the two insulating layers are connected in a stacked manner to form the second insulating part.

24. The electrode assembly according to claim 23, wherein a thickness of the insulating layer is 7 µm to 30 µm.

25. The electrode assembly according to claim 23 or 24, wherein a difference between a thickness of the insulating layer and a thickness of the first current collector main body has an insulation value not greater than 10 µm, optionally not greater than 5 µm.

26. The electrode assembly according to any one of claims 23 to 25, wherein the first end surface comprises a tab lead-out region and a non-tab lead-out region, and the first tab extends from only the tab lead-out region and protrudes from the second insulating part in a direction away from the first current collector main body;
non-overlapping portions of the two connecting parts and the first tab are directly connected to form a first extending part, and the first extending part covers the non-tab lead-out region in the first direction;
overlapping portions of the two connecting parts and the first tab form a second extending part, and cover at least a portion of the first tab in the thickness direction.

27. The electrode assembly according to claim 26, wherein a dimension of the first extending part in the first direction is equal to a dimension of the second extending part in the first direction.

28. The electrode assembly according to any one of claims 2 to 22, wherein the insulating member is an integrally formed structure.

29. The electrode assembly according to any one of claims 2 to 28, wherein the first current collector main body further comprises two second end surfaces, the two second end surfaces being respectively arranged at two ends of the first end surface, and each of the second end surfaces being connected to the two first surfaces;
the insulating member further comprises a third insulating part, the third insulating part being connected to the first insulating part and the second insulating part and covering a portion of the second end surface.

30. The electrode assembly according to any one of claims 2 to 29, wherein the first current collector main body comprises the two first end surfaces oppositely arranged in a first direction, the first direction being perpendicular to a thickness direction of the first electrode plate main body;
the electrode assembly comprises two insulating members, the two insulating members being respectively arranged on outer sides of the two first end surfaces.

31. The electrode assembly according to any one of claims 2 to 30, further comprising a separator, wherein the separator is configured to separate the first electrode plate from the second electrode plate;
in the first direction, an end of the second insulating part away from the first insulating part exceeds the separator.

32. The electrode assembly according to any one of claims 2 to 30, further comprising a separator, wherein the separator is configured to separate the first electrode plate from the second electrode plate;
in the first direction, an end of the second insulating part away from the first insulating part does not exceed the separator.

33. The electrode assembly according to any one of claims 1 to 32, wherein the second electrode plate comprises a second electrode plate main body, wherein the second electrode plate main body and the first electrode plate main body are arranged in a stacked manner;
the second electrode plate main body comprises a second current collector main body and a second active substance layer, the second current collector main body comprising two second surfaces arranged oppositely and a third end surface connecting the two second surfaces, and the second active substance layer being arranged on the second surface;
the first end surface is located at an end of the first current collector main body in the first direction, and the third end surface is located at an end of the second current collector main body in the first direction;
in the thickness direction, the insulating member separates the third end surface from the first electrode plate.

34. The electrode assembly according to claim 33, wherein the first electrode plate is a positive electrode plate, and the second electrode plate is a negative electrode plate;
two ends of the second active substance layer exceed the first electrode plate main body in the first direction.

35. The electrode assembly according to any one of claims 1 to 34, wherein the insulating member has a melting point of 95 °C to 150 °C.

36. The electrode assembly according to any one of claims 1 to 35, wherein the insulating member comprises an adhesive, and the adhesive comprises at least one of ethylene and a copolymer thereof, a polyolefin, a polyester, a polyurethane, a polyamide, styrene, and a block copolymer thereof.

37. The electrode assembly according to any one of claims 1 to 36, wherein the insulating member comprises a substrate layer and an adhesive layer, the substrate layer being connected to the first electrode plate main body by the adhesive layer.

38. The electrode assembly according to claim 37, wherein the substrate layer comprises at least one of polyethylene terephthalate, polypropylene, polyethylene, and block copolymers thereof;
the adhesive layer comprises at least one of polyacrylate, styrene-butadiene rubber, polyisobutylene, or butyl rubber.

39. The electrode assembly according to any one of claims 1 to 38, wherein the insulating member has an elastic modulus of 500 MPa to 3000 MPa, and optionally, the insulating member has an elastic modulus of 770 MPa to 1320 MPa.

40. The electrode assembly according to any one of claims 1 to 39, wherein the insulating member has a tensile strength of 949 kgf/cm² to 1363 kgf/cm².

41. The electrode assembly according to any one of claims 1 to 40, wherein the insulating member is connected to the first active substance layer;
a peel strength between the insulating member and the first active substance layer is higher than a peel strength between the first active substance layer and the first surface.

42. The electrode assembly according to any one of claims 1 to 41, further comprising a separator, wherein the separator is configured to separate the first electrode plate from the second electrode plate;
the first electrode plate, the separator, and the second electrode plate are arranged in a wound manner, and in a winding direction of the first electrode plate, two ends of the insulating member do not exceed the separator; alternatively, the first electrode plate main body is in a flat-plate shape, and in a second direction, the two ends of the insulating member do not exceed the separator, the second direction being perpendicular to the first direction and the thickness direction.

43. A battery cell, comprising:
a housing; and
the electrode assembly according to any one of claims 1 to 42, accommodated in the housing.

44. A battery, comprising a plurality of said battery cells according to claim 43.

45. An electric device, comprising the battery according to claim 44, wherein the battery is configured to provide electric energy.
